# EUROPÄISCHE PATENTSCHRIFT

(11) **EP 3 108 610 B1**
(45) Veröffentlichungstag und Bekanntmachung des Hinweises auf die Patenterteilung: **12.02.2020**
(21) Anmeldenummer: 15706764.6
(22) Anmeldetag: 20.02.2015
(51) Int. Cl.: H04L 9/32, H04L 9/08

(54) **VERFARHEN UND SYSTEM ZUM ERSTELLEN UND ZUR GÜLTIGKEITSPRÜFUNG VON GERÄTEZERTIFIKATEN**
METHOD AND SYSTEM FOR CREATING AND CHECKING THE VALIDITY OF DEVICE CERTIFICATES
PROCÉDÉ ET SYSTÈME D'ÉTABLISSEMENT ET VÉRIFICATION DE VALIDITÉ DE CERTIFICATS D'APPAREIL

(30) Priorität: 20.02.2014 DE 102014102168
(43) Veröffentlichungstag der Anmeldung: 28.12.2016
(73) Patentinhaber: Phoenix Contact GmbH & Co. KG, 32825 Blomberg (DE)
(72) Erfinder: NITSCHKE, Torsten, 32657 Lemgo (DE)
(74) Vertreter: Blumbach · Zinngrebe Patentanwälte PartG mbB
(86) Internationale Anmeldenummer: PCT/EP2015/053622
(87) Internationale Veröffentlichungsnummer: WO 2015/124726

(56) Entgegenhaltungen:
- US-A1- 2007 220 259
- US-A1- 2013 283 042
- US-B1- 6 389 537
- CAPKUN S ET AL: "Self-Organized Public-Key Management for Mobile Ad Hoc Networks", TECHNICAL REPORTS IN COMMUNICATIONS SCIENCE OF ECOLEPOLYTECHNIQUE FEDERALE DE LAUSANNE, XX, XX, 28. Mai 2002 (2002-05-28), Seiten 1-17, XP002292469,
- JIN-BUM HWANG ET AL: "Two Layered PKI Model for Device Authentication in Multi-Domain Home Networks", 2006 IEEE TENTH INTERNATIONAL SYMPOSIUM, IEEE, 28. Juni 2006 (2006-06-28), Seiten 1-6, XP010937934, DOI: 10.1109/ISCE.2006.1689451 ISBN: 978-1-4244-0216-8

## Beschreibung

Die Erfindung betrifft allgemein Gerätezertifikate, d.h. elektronische Zertifikate zur Bestätigung der Identität eines Gerätes, und insbesondere jeweils ein Verfahren und ein System zum Erstellen von Gerätezertifikaten und zur Gültigkeitsprüfung von Gerätezertifikaten.

Elektronische Zertifikate dienen der Bestätigung von Informationen, insbesondere bestimmter Eigenschaften von Personen oder Objekten, auf eine Weise, die eine Authentizitäts- und Integritätsprüfung mittels kryptografischer Verfahren erlaubt, wobei das Zertifikat in der Regel die zur Prüfung erforderlichen Daten beinhaltet.

Insbesondere wird ein elektronisches Zertifikat von einer ausstellenden Zertifizierungsinstanz digital signiert, wobei die digitale Signatur Bestandteil des Zertifikates ist. Häufig wird aus den zu zertifizierenden Informationen eine kryptografische Prüfsumme gebildet, zum Beispiel mittels einer Hash-Funktion, und nur diese Prüfsumme mit dem privaten Anteil eines asymmetrischen Schlüsselpaares der Zertifizierungsinstanz digital signiert. Auf diese Weise kann mittels des öffentlichen Schlüssels der Zertifizierungsinstanz die Authentizität der zertifizierten Informationen überprüft werden, indem unter Verwendung des Public-Key-Verfahrens die ursprüngliche kryptografische Prüfsumme ermittelt und mit einer aus den zertifizierten Informationen erneut gebildeten kryptografischen Prüfsumme verglichen wird, wobei bei Übereinstimmung der kryptografischen Prüfsummen die Authentizität der zertifizierten Informationen vorliegt.

Die rechtliche Gültigkeit elektronischer Signaturen wird in Deutschland durch das Signaturgesetz und die Signaturverordnung geregelt, wobei per Gesetz qualifizierte elektronische Signaturen rechtlich handschriftlichen Unterschriften mit wenigen Ausnahmen gleich gestellt sind. Für qualifizierte elektronische Signaturen bestehen bestimmte Anforderungen an den Signaturerstellungsprozess, die dabei verwendeten Mittel und insbesondere an die Zertifizierungsdienste, welche die dafür notwendigen qualifizierten Zertifikate ausstellen. Qualifizierte elektronische Signaturen werden immer von natürlichen Personen erstellt. Entsprechend ist der Inhaber eines qualifizierten elektronischen Zertifikates für Signaturen immer eine natürliche Person.

Zur Bestätigung der Identität eines Gerätes werden als Gerätezertifikate bezeichnete elektronische Zertifikate eingesetzt, wobei Gerätezertifikate unter anderem dazu dienen, einem Gerätebesitzer die Prüfung der Echtheit eines Gerätes zu ermöglichen. Ein Zertifikat mit diesem Zweck wird als Echtheitszertifikat bezeichnet. Außerdem kann ein Gerätebesitzer selbst ausgestellte Gerätezertifikate zur Kennzeichnung seines Besitzes verwenden. Solche Zertifikate werden als Besitzzertifikate bezeichnet.

Ein Echtheitszertifikat ist dementsprechend ein Gerätezertifikat, das von einem Gerätehersteller zur Bestätigung der Echtheit eines von ihm hergestellten Gerätes erstellt wurde. Echtheit bedeutet in diesem Zusammenhang, dass ein Gerät tatsächlich von einem bestimmten Hersteller stammt. Ein Gerätehersteller stellt dazu bei der Herstellung des Gerätes ein Zertifikat für ein einmaliges, nur in dem Gerät befindliches Geheimnis aus. Der Gerätehersteller veröffentlicht die Prüfkriterien für diese Zertifikate, damit ein Besitzer die Echtheit der Geräte bestimmen kann.

Solche Zertifikate sind in einschlägiger Literatur beschrieben. So wird beispielsweise im IEEE Standard 802.1AR -2009 (IEEE Standard for Local and metropolitan area networks - Secure Device Identity, 2009) ein sogenannter Initial Secure Device Identifier (IDevID) beschrieben, bestehend aus einem Geheimnis in Form eines privaten Schlüssels und einem Zertifikat in Form eines Public-Key-Zertifikats konform zu dem in RFC 5280 (Internet X.509 Public Key Infrastructure Certificate and Certificate Revocation List (CRL) Profile) beschriebenen X.509-Zertifikat. Für die X.509 Public Key Infrastructure wird nachfolgend auch die Kurzbezeichnung PKIX verwendet.

Ferner beschreibt die Spezifikation des Trusted Platform Module (TPM) der Trusted Computing Group unter anderem in Teil 1 (TPM Main Part 1 Design Principles Specification Version 1.2, Revision 116, 1. März 2011, TCG) einen sogenannten "Endorsement Key" bestehend aus einem asymmetrischen Schlüsselpaar, umfassend einen als PRIVEK bezeichneten privaten Schlüssel und einen als PUBEK bezeichneten öffentlichen Schlüssel, zu dem Zwecke, die Echtheit des TPM-Chips mittels elektronischer Signatur, zum Beispiel mittels Zertifikat, zu bestätigen. Ein entsprechendes Zertifikat wird im Folgenden auch als EK-Zertifikat bezeichnet.

Ein Endorsement Key (EK) eines TPM-Chips kann mit Hilfe eines öffentlich bekannten Wurzelzertifikates überprüft werden. Ferner können Plattformhersteller, wie zum Beispiel Platinen- oder Gerätehersteller, welche ein TPM integrieren, ein als "Platform Endorsement Certificate" bezeichnetes Attributzertifikat erstellen, um die Integration eines TPM-Chips mit einmaligem Endorsement Key in eine bestimmte Plattform zu bestätigen.
Aus dem Stand der Technik ist somit bekannt, die Herstellung von Geräten und deren Echtheit mittels elektronischer Unterschriften zu dokumentieren und durch den späteren Gerätebesitzer prüfbar zu machen.

In der Regel sind dazu beim Gerätehersteller asymmetrische Schlüsselpaare, im Folgenden auch als Manufacturer's Attestation Keys (MAKey) bezeichnet, im Einsatz. Das zum MAKey gehörende, als MACert bezeichnete Zertifikat wird in der Regel im Range eines sogenannten Zwischenzertifikates (intermediate CA certificate, Sub-CA-Zertifikat) einer Zertifizierungsstelle als Bestandteil einer Zertifikatskette verwendet. Dieses Zertifikat ist direkt oder indirekt durch die Zertifizierungsstelle des Herstellers bestätigt, zum Beispiel indem der als Manufacturer's Trust Anchor Key, kurz MTAKey, bezeichnete Wurzelschlüssel der Zertifizierungsstelle verwendet wurde, um es digital zu signieren. Der Wurzelschlüssel wird in der Regel mit Hilfe eines selbst-signierten Wurzelzertifikates, auch als Manufacturer's Trust Anchor Certificate, kurz MTACert, bezeichnet, bestätigt und vom Hersteller veröffentlicht.

Der private Anteil des MAKeys wird an einem Produktionsarbeitsplatz verwendet. Sollte solch ein privater Anteil kopiert oder missbraucht werden, können originale Gerätezertifikate nicht von missbräuchlich erstellten Gerätezertifikaten unterschieden werden. In solchen Fällen wird das zugehörige Sub-CA-Zertifikat üblicherweise gesperrt. Damit dieses Wirksamkeit zeigt, müssen während der Prüfung von Zertifikatsketten noch zusätzlich Sperrinformationen eingeholt werden. Sperrinformationen werden üblicherweise durch regelmäßige Veröffentlichung einer Certificate Revocation List (CRL) oder relativ unverzüglich über Sperrinformationsdienste wie einen OCSP-Server (Online Certificate Status Protocol Server), beispielsweise gemäß RFC 2560, zur Verfügung gestellt.

Während der Verifikation einer Zertifikatskette müssen gemäß RFC 5280 die Gültigkeitszeiträume der Zertifikate beachtet werden. Dies gilt besonders, wenn Sperrinformationen zu beachten sind. Die Gültigkeit einer Zertifikatskette wird bei dem in RFC 5280 beschriebenen Verfahren für einen bestimmten Zeitpunkt t, in der Regel für die aktuelle Zeit, überprüft. Der Zeitpunkt t muss innerhalb des Gültigkeitszeitraumes aller Zertifikate der Kette liegen und für alle Zertifikate der Kette außer dem Wurzelzertifikat müssen Sperrinformationen vorliegen, die gemessen an t hinreichend jung und gültig sind, wobei Sperrinformationen in der Regel ebenfalls einen Gültigkeitszeitraum nennen.

Eine Sperrung eines Sub-CA-Zertifikates hat zur Folge, dass alle bereits ausgestellten und damit zu prüfenden Gerätezertifikate ungültig werden. Als Gegenmaßnahme muss ein Gerätehersteller anhand seiner Gerätedatenbank neue Gerätezertifikate für die betroffenen Geräte ausstellen, bei Verwendung von TPMs beispielsweise in Form von EK-Zertifikaten,. Aus diesem Grunde sind bei der Herstellung der Geräte die öffentlichen Teile eingesetzter asymmetrischer Schlüsselpaare, wie beispielsweise eines Endorsement Key (EK), in einer Gerätedatenbank zu archivieren. Allerdings ist die Ausstellung neuer Gerätezertifikate mit Aufwand und Kosten verbunden, insbesondere dann, wenn die Geräte im Feld schwierig oder nicht erreichbar sind.

Wegen der Kosten im Falle einer Kompromittierung von privaten Schlüsseln, die zu Sub-CA-Zertifikaten gehören, wird in der Praxis häufig auf die Sperrung von Sub-CA-Zertifikaten verzichtet und es werden gegebenenfalls kaufmännische Maßnahmen zur Regelung von Schäden angewendet. Oftmals bestehen keine Prozeduren, nach denen im Falle einer Kompromittierung zu handeln ist.

Ein weiteres Problem besteht darin, dass die Sperrinformation am Ort der Prüfung verfügbar gemacht werden muss, je nach Einsatzzweck jedoch am Ort der Prüfung gegebenenfalls keine Verbindung zu einem Kommunikationsnetzwerk zur Verfügung steht.

Ein Besitzzertifikat ist ein Gerätezertifikat, welches von einem Gerätebesitzer für sein Gerät ausgestellt wird, um zu bestätigen, dass es sich in seinem Besitz befindet, und stellt somit ein Identifikationskriterium für seinen Besitz dar. Ein Gerätebesitzer stellt dazu bei der Inbesitznahme eines Gerätes und gegebenenfalls auch wiederholt während des Besitzes ein Zertifikat für ein einmaliges, nur in dem Gerät befindliches Geheimnis aus. Der Gerätebesitzer verwendet die zum Zertifikat gehörenden Prüfkriterien um jederzeit effizient feststellen zu können, ob ein Gerät zu seinem Besitz gehört oder nicht. Weiter verwenden die Geräte des Besitzers diese Zertifikate untereinander, um sich gegenseitig ihre Identität und Zugehörigkeit zur Vertrauensdomäne des Besitzers nachzuweisen.

Aus dem Dokument RFC 5916 (Device Owner Attribute) der Internet Engineering Task Force (IETF) ist beispielsweise ein Attribut für Public-Key-Zertifikate und Attributzertifikate bekannt, mit dem der Besitz eines Gerätes bezeichnet werden kann. Es nennt als Zweck für dieses Attribut zum Beispiel seine Verwendung bei einer automatischen Entscheidung der Vertrauenswürdigkeit zwischen zwei miteinander kommunizierenden Geräten. Sie vertrauen sich beispielsweise, wenn ihre Zertifikate den entsprechenden Eigentümer nennen.

In der Regel verwenden Gerätehersteller für ihre Geräte Gerätezertifikate kompatibel zum PKIX-Standard, damit eine möglichst große Interoperabilität gewährleistet ist. Insbesondere wird das durch den PKIX-Standard definierte Gültigkeitsmodell für Zertifikatsketten angewendet.

Bei der Erstellung von Gerätezertifikaten verwenden manche Gerätebesitzer einen eigenen Zertifizierungsdienst, welcher mit einem als Device Owner's Attestation Key (DOAKey) bezeichneten Schlüssel Gerätezertifikate unterzeichnet, wobei auch mehrere Schlüssel dieser Art (DOAKey1, DOAKey2, DOAKey3, ...) eingesetzt werden können. Analog zu den oben beschriebenen Schlüsseln MAKey und MTAKey bzw. Zertifikaten MACert und MTACert und mit analoger Verwendung sind in der Regel ein als Device Owner's Attestation Certificate (DOACert) bezeichnetes Zertifikat zu einem DOAKey, sowie ein als Device Owner's Trust Anchor Key (DOTAKey) bezeichneter Schlüssel der Wurzelinstanz des Zertifizierungsdienstes und ein zugehöriges Zertifikat Device Owner's Trust Anchor Certificate (DOTACert) vorgesehen.

Der Unterschied zu den oben beschriebenen Schlüsseln MAKey und MTAKey bzw. Zertifikaten MACert und MTACert ist, dass der Gerätebesitzer die Verwendung seiner Schlüssel und Zertifikate kontrolliert und das von ihm erzeugte Gerätezertifikat erst nach Erhalt des Gerätes erzeugt und einbringt. Für das Gerätezertifikat wird entweder ein vorhandenes Schlüsselpaar des Gerätes verwendet, zum Beispiel der EK im TPM eines Gerätes, ein neues Schlüsselpaar im Gerät erzeugt, zum Beispiel mit Hilfe eines TPM, oder durch den Gerätebesitzer ein neues Schlüsselpaar erzeugt und in das Gerät eingebracht.

Bei der Kompromittierung von Schlüsseln zur Ausstellung von Gerätezertifikaten (DOAKey1, DOAKey2, DOAKey3, ...) bestehen die gleichen Schwierigkeiten und Kosten für den Gerätebesitzer wie sie oben für den Gerätehersteller beschrieben wurden. Bei einem Gültigkeitsmodell nach dem PKIX-Standard werden alle mit dem jeweiligen Schlüssel unterzeichneten Gerätezertifikate ungültig und müssen ersetzt werden. Bei industriellen Geräten sind diese durchaus an unzugänglichen Stellen im Feld installiert, so dass der Austausch aufwändig ist.

Zudem besteht auch hier das oben beschriebene Problem, dass am Ort der Prüfung gegebenenfalls kein Zugang zu einem Kommunikationsnetzwerk zur Bereitstellung der Sperrinformationen besteht.

Die Patentschrift US 6,389,537 B1 an D. Davis und H. Herbert offenbart die Sicherung eines Geräts durch eine Zertifikatskette.

Der Artikel "Self-Organized Public-Key Management for Mobile Ad Hoc Networks" von S. Capkun, L. Buttyan und J.P. Hubaux offenbart die Verwaltung von Zertifikaten in einem Ad-Hoc-Netzwerk.

Die Patentanmeldungsschrift US 2007/220259 A1 durch M. Pavlicic offenbart die Erstellung, Prüfung und Verwaltung von Zeitstempeln im Zusammenhang mit Zertifikatsketten.

Es ist daher die Aufgabe der vorliegenden Erfindung, einen Weg aufzuzeigen, wie die oben beschriebenen Probleme im Stand der Technik reduziert oder vermieden werden können, und insbesondere einen Weg aufzuzeigen, wie die Erstellung und Gültigkeitsprüfung von Gerätezertifikaten vereinfacht und/oder verbessert werden kann, insbesondere für den Fall der Kompromittierung von Signierschlüsseln, die zur Erstellung von Gerätezertifikaten verwendet werden, sowie für den Fall, dass zum Zeitpunkt der Gültigkeitsprüfung keine Kommunikationsverbindung zur Verfügung steht.

Diese Aufgabe wird durch die Merkmale der unabhängigen Ansprüche gelöst. Vorteilhafte Ausführungsformen sind Gegenstand der abhängigen Ansprüche.

Ein Grundgedanke der Erfindung besteht darin, eine Zustandsauskunft für Gerätezertifikate bereitzustellen, welche einen Positivnachweis der Existenz und Gültigkeit des Gerätezertifikates umfasst, sowie alternativ oder zusätzlich ein spezielles Gültigkeitsmodell für Gerätezertifikate anzuwenden, wobei der Ausstellungszeitpunkt des Gerätezertifikates mittels eines signierten elektronischen Zeitstempels dokumentiert wird, wobei zum Signieren des Zeitstempels ein anderer Signierschlüssel eingesetzt wird als zum Signieren des Gerätezertifikates.

Ein weiterer Aspekt der Erfindung besteht darin, alle für die Gültigkeitsprüfung eines in einem Speicher eines Gerätes gespeicherten Gerätezertifikates erforderlichen Informationen ebenfalls in einem Speicher des Gerätes zu speichern, so dass jederzeit eine Identitätsprüfung des Gerätes ohne Einholen zusätzlicher Daten erfolgen kann, d.h. eine Offline-Prüfung des gespeicherten Gerätezertifikates ermöglicht wird.

Dementsprechend sieht ein Verfahren zum Erstellen von Gerätezertifikaten für elektronische Geräte vor, ein zu zertifizierendes elektronisches Gerät bereitzustellen, in welchem ein von außerhalb des Gerätes nicht auslesbares Geheimnis gespeichert ist, ein Gerätezertifikat für dieses Gerät zu erzeugen, dessen Zertifikatsinformation kryptographisch an das in dem Gerät gespeicherte Geheimnis gebunden ist, wobei das Gerätezertifikat eine mit einem Signierschlüssel erzeugte digitale Signatur umfasst und mittels einer Zertifikatskette authentisierbar ist.

Die Zertifikatskette ist eine mit dem Gerätezertifikat beginnende Folge von wenigstens zwei Zertifikaten, wobei jedes Zertifikat der Zertifikatskette eine Information umfasst, welche den Gültigkeitszeitraum des jeweiligen Zertifikates definiert, und wobei jedes Zertifikat der Zertifikatskette mit Ausnahme des Gerätezertifikates eine Zertifikatsinformation umfasst, mit welcher das jeweils in der Folge vorhergehende Zertifikat authentisierbar ist.

Bei der Verwendung asymmetrischer Schlüsselpaare kann die Echtheit der Signatur des Gerätezertifikates mit dem öffentlichen Teil des Signierschlüssels des Ausstellers des Gerätezertifikates geprüft werden. Für die Prüfung der Authentizität des öffentlichen Teil des Signierschlüssels des Ausstellers des Gerätezertifikates wird ein weiteres digitales Zertifikat bereitgestellt. Für die Prüfung der Authentizität des öffentlichen Teil des Signierschlüssels des Ausstellers dieses weiteren digitalen Zertifikates kann wiederum ein weiteres Zertifikates bereitgestellt werden. Auf diese Weise wird die Zertifikatskette als Folge von Zertifikaten aufgebaut, beginnend mit dem Gerätezertifikat, die jeweils die Authentizität des öffentlichen Schlüssels bestätigen, mit dem das vorhergehende Zertifikat geprüft werden kann. Eine Zertifikatskette wird auch als Validierungspfad oder Zertifizierungspfad bezeichnet.

Die Zertifikatskette umfasst das Gerätezertifikat und wenigstens ein weiteres Zertifikat. Da auf das letzte Zertifikat der Zertifikatskette kein weiteres Zertifikat folgt, ist dies vorzugsweise ein vertrauenswürdiges Zertifikat, bei welchem auf eine Prüfung der Echtheit verzichtet werden kann.

Ferner sieht das Verfahren in einer ersten Variante vor, für das erzeugte Gerätezertifikat eine Bestätigungsinformation zu erstellen, welche bestätigt, dass das Gerätezertifikat von einer autorisierten Instanz erzeugt wurde. Das Bereitstellen der Zustandsinformationen erfolgt dabei in der Regel mittels eines Zertifikatsauskunftsdienstes.

Die Bestätigungsinformation kann beispielsweise darin bestehen, dass das Gerätezertifikat oder eine aus dem Gerätezertifikat abgeleitete Information abrufbar gespeichert wird, zum Beispiel in einer Datenbank, welche typischerweise von der die Gerätezertifikate ausstellenden Instanz bereitgestellt wird.

Vorteilhaft kann das Verfahren auch das Bereitstellen einer digital signierten Zustandsinformation für das Gerätezertifikat umfassen, welche einen Nachweis umfasst, dass das Gerätezertifikat von einer autorisierten Instanz erzeugt wurde, wobei die Zustandsinformation unter Ansprechen auf die Bestätigungsinformation bzw. nur bei Vorliegen einer entsprechenden Bestätigungsinformation erzeugt wird. Ferner kann auch vorteilhaft vorgesehen sein, für wenigstens ein weiteres Zertifikat der Zertifikatskette eine digital signierte Zustandsinformation bereitzustellen, welche den Nachweis umfasst, dass das weitere Zertifikat von einer autorisierten Instanz erzeugt wurde.

In einer zweiten Variante sieht das Verfahren ferner vor, einen digital signierten Zeitstempel zu erzeugen, welcher das Gerätezertifikat mit dem Zeitpunkt verknüpft, zu dem der Zeitstempel erzeugt wird. Der digital signierte Zeitstempel wird dabei vorzugsweise derart erzeugt, dass das Gerätezertifikat oder ein Hash-Wert des Gerätezertifikates zusammen mit der aktuellen Zeitangabe, zum Beispiel in Form von Datum und Uhrzeit, mittels eines Signierschlüssels digital signiert wird.

In einer besonders bevorzugten Ausführungsform des Verfahrens werden die beschriebene erste und zweite Variante kombiniert.

Vorzugsweise wird in der zweiten Variante des Verfahrens der digital signierte Zeitstempel von einem Server, welcher einen Zeitstempeldienst bereitstellt, in Antwort auf eine Anfrage zur Erstellung eines Zeitstempels erzeugt. Die Anfrage wird beispielsweise von einem mit dem Server über ein Kommunikationsnetzwerk verbundenen Produktionscomputer zum Server und der erzeugte Zeitstempel zurück an den Produktionscomputer übertragen, wobei die Anfrage vorzugsweise das Gerätezertifikat oder einen Hash-Wert des Gerätezertifikates umfasst.

Das erzeugte Gerätezertifikat und/oder wenigstens ein weiteres Zertifikat der Zertifikatskette und/oder der digital signierte Zeitstempel und/oder wenigstens eine digital signierte Zustandsinformation werden vorzugsweise in einer dem Gerät zuordenbaren Weise abrufbar bereitgestellt. Dies kann beispielsweise durch Speichern in einem auslesbaren Speicher oder Speichermedium erfolgen, welches dem elektronischen Gerät zugeordnet oder im elektronischen Gerät angeordnet ist. Beispielsweise kann als Speicher ein Flash-Speicher des Gerätes genutzt werden oder es wird dem Gerät ein Speichermedium wie zum Beispiel eine CD beigelegt. Alternativ können das erzeugte Gerätezertifikat und/oder wenigstens ein weiteres Zertifikat der Zertifikatskette und/oder der digital signierte Zeitstempel und/oder wenigstens eine digital signierte Zustandsinformation beispielsweise über einen Internet-Server zugänglich gemacht werden, welcher die Daten beispielsweise in Antwort auf eine Geräteidentifikation, wie zum Beispiel einer Seriennummer des Gerätes, bereitstellt. Dies kann beispielsweise durch Einrichten eines entsprechenden Verzeichnisdienstes erfolgen.

Vorteilhaft werden die erzeugten Zeitstempel gezählt und der Server erzeugt und überträgt den Zeitstempel nur, solange eine vorgegebene Obergrenze für die Anzahl der erzeugten Zeitstempel nicht überschritten wird. Zu diesem Zweck wird vorzugsweise an den Server, welcher den Zeitstempeldienst bereitstellt, ein Wert für diese Obergrenze übertragen und im Server gespeichert. Das Zählen der Zeitstempel erfolgt beispielsweise derart, dass zunächst ein im Server gespeicherter Zähler auf Null gesetzt wird, der dann bei jeder Anfrage zur Erstellung eines Zeitstempels inkrementiert und mit dem gespeicherten Wert der Obergrenze verglichen wird. Ist der Zähler kleiner oder gleich dem Wert der Obergrenze, so wird ein Zeitstempel erzeugt und zum Produktionscomputer übertragen, andernfalls wird kein Zeitstempel erzeugt, wobei in diesem Fall zum Produktionscomputer vorzugsweise eine entsprechende Fehlernachricht übertragen wird.

Auf diese Weise kann nur für eine vorgegebene begrenzte Anzahl von Geräten jeweils ein Gerätezertifikat mit zugeordnetem Zeitstempel erstellt werden. Dies ist besonders vorteilhaft zur Überwachung von Produktionskontingenten bei Auftragsfertigung elektronischer Geräte.

Zur Erhöhung der Sicherheit werden vorzugsweise für die Erzeugung der digitalen Signatur des Gerätezertifikates und für die Erzeugung der digitalen Signatur des Zeitstempels unterschiedliche Signierschlüssel verwendet.

Ferner werden zur Erhöhung der Sicherheit vorzugsweise für die Erzeugung der digitalen Signatur des Gerätezertifikates und für die Erzeugung der digitalen Signatur der Zustandsinformationen unterschiedliche Signierschlüssel verwendet.

Wird eine unberechtigte Verwendung eines zum Signieren eines ersten Zertifikates der Zertifikatskette verwendeten Signierschlüssels erkannt, so wird vorteilhaft eine digital signierte Zustandsinformation für das in der Zertifikatskette auf das erste Zertifikat folgende Zertifikat erzeugt, wobei die Zustandsinformation eine Sperrinformation umfasst, welche das in der Zertifikatskette auf das erste Zertifikat folgende Zertifikat für Prüfzeitpunkte ab dem Zeitpunkt, zu dem die unberechtigte Verwendung erkannt wurde, als ungültig identifiziert.

In einer besonders vorteilhaften Ausführungsform des Verfahrens bildet das Geheimnis, welches kryptografisch an eine Zertifikatsinformation des Gerätezertifikates gebunden ist, den privaten Teil eines asymmetrischen Schlüsselpaares, wobei das Geheimnis vorzugsweise ein einmaliges Geheimnis ist. Somit ist vorzugsweise der private Schlüssel des Schlüsselpaares nicht auslesbar im Gerät gespeichert und der öffentliche Schlüssel des Schlüsselpaares ist Bestandteil der Zertifikatsinformation des Gerätezertifikates, wobei das Gerät dazu ausgebildet ist, mittels des gespeicherten Geheimnisses eine Prüfung zu ermöglichen, ob eine Bindung des Gerätezertifikates an das Gerät besteht. Beispielsweise ist das Gerät dazu ausgebildet, einen Wert zu empfangen, diesen mit dem gespeicherten privaten Schlüssel auf der Basis eines vorgegebenen Verschlüsselungsalgorithmus zu verschlüsseln und das Ergebnis in Antwort auf das Empfangen des Wertes auszugeben, so dass der ausgegebene Wert mit dem im Gerätezertifikat enthaltenen öffentlichen Schlüssel entschlüsselt und mit dem ursprünglichen Wert verglichen werden kann, wobei bei Übereinstimmung eine Bindung des Gerätezertifikates an das Gerät besteht.

In einer bevorzugten Ausführungsform der Erfindung ist das Geheimnis in einem Chip des Gerätes gespeichert. Dieser Chip kann vorteilhaft als Chip gemäß der Spezifikation des Trusted Platform Module (TPM) der Trusted Computing Group, kurz TPM-Chip, ausgebildet sein, in welchem ein als PRIVEK bezeichneter privater Schlüssel eines als "Endorsement Key" bezeichneten asymmetrischen Schlüsselpaares gespeichert ist. Auch kann ein solcher TPM-Chip selbst das elektronische Gerät bilden, für welches ein Gerätezertifikat erstellt wird. In diesem Fall kann vorteilhaft zusätzlich ein weiteres Gerätezertifikat, zum Beispiel in Form eines Attributzertifikates, bereitgestellt werden, welches zur Bestätigung dient, dass ein bestimmter TPM-Chip im Gerät enthalten ist. Vorteilhaft kann das weitere Gerätezertifikat auf die gleiche Weise bereitgestellt werden wie das Gerätezertifikat, d.h. beispielsweise im gleichen Speicher oder Speichermedium gespeichert werden oder über den gleichen Verzeichnisdienst abrufbar bereitgestellt werden.

Ein Verfahren zur Prüfung der Gültigkeit eines nach dem oben beschriebenen Verfahren erstellten Gerätezertifikates sieht vor, ein Gerätezertifikat und ein vertrauenswürdiges Zertifikat bereitzustellen, wobei das Gerätezertifikat mit dem vertrauenswürdigen Zertifikat über eine Zertifikatskette verkettbar ist, wobei die Zertifikatskette eine mit dem Gerätezertifikat beginnende und mit dem vertrauenswürdigen Zertifikat endende Folge von wenigstens zwei Zertifikaten ist, wobei jedes Zertifikat der Zertifikatskette eine Information umfasst, welche den Gültigkeitszeitraum des jeweiligen Zertifikates definiert, und wobei jedes Zertifikat der Zertifikatskette mit Ausnahme des Gerätezertifikates eine Zertifikatsinformation umfasst, mit welcher das jeweils in der Folge vorhergehende Zertifikat authentisierbar ist, sowie einen zugeordneten Prüfzeitpunkt für jedes Zertifikat der Zertifikatskette festzulegen. Eine gültige Definition eines Gültigkeitszeitraums kann insbesondere auch eine in die Vergangenheit oder in die Zukunft gerichtete unbegrenzte Gültigkeit umfassen, d.h. dass ein Ende oder beide Enden des Gültigkeitszeitraumes unbegrenzt sind. Für diesen Zweck können beispielsweise für den Anfang und/oder das Ende des Gültigkeitszeitraumes jeweils Werte verwendet werden, welche aufgrund einer vorgegebenen Konvention eine unbegrenzte Gültigkeit repräsentieren.

Auf dieser Basis erfolgt eine erste Anzahl von Prüfungen, und zwar eine Prüfung, ob das Gerätezertifikat mittels der Zertifikatskette erfolgreich authentisierbar ist, ob für jedes Zertifikat der Zertifikatskette der zugeordnete Prüfzeitpunkt innerhalb des Gültigkeitszeitraumes des jeweiligen Zertifikates liegt, und, mittels eines in einem Speicher des Gerätes hinterlegten Geheimnisses, ob eine Bindung des Gerätezertifikates an das Gerät besteht. Liefert die Prüfung in wenigstens einem Punkt ein negatives Ergebnis, so wird das Gerätezertifikat als ungültig erkannt.

Das beschriebene Verfahren zum Erstellen eines Gerätezertifikates für ein elektronisches Gerät und das beschriebene Verfahren zur Gültigkeitsprüfung eines so erstellten Gerätezertifikates bilden zusammen ein Verfahren zum Bestätigen der Identität eines elektronischen Gerätes zum Zweck der Echtheits- oder Besitzprüfung. Insbesondere ermöglichen die erfindungsgemäßen Verfahren einen Schutz vor Fälschung eines Gerätezertifikates.

In einer ersten Variante des Prüfverfahrens wird für das Gerätezertifikat eine zugeordnete, digital signierte Zustandsinformation bereitgestellt, wobei die Zustandsinformation das Gerätezertifikat als gültig oder ungültig identifiziert und eine Information umfasst, welche den Gültigkeitszeitraum der Zustandsinformation definiert. In dieser Ausführungsvariante wird für die bereitgestellte Zustandsinformation zusätzlich geprüft, ob ein für die Zustandsinformation festgelegter Prüfzeitpunkt innerhalb des Gültigkeitszeitraumes der Zustandsinformation liegt und ob die Zustandsinformation das Gerätezertifikat als gültig identifiziert, wobei die Kennzeichnung des Gerätezertifikates als gültig den Nachweis umfasst, dass das Gerätezertifikat von einer autorisierten Instanz tatsächlich erzeugt wurde. Ist dieses Prüfergebnis positiv und auch die oben beschriebene erste Anzahl von Prüfungen erfolgreich, so wird das Gerätezertifikat als gültig erkannt, andernfalls als ungültig.

Vorteilhaft wird für wenigstens ein weiteres Zertifikat der Zertifikatskette eine zugeordnete, digital signierte Zustandsinformation bereitgestellt, wobei die Zustandsinformation das weitere Zertifikat als gültig oder ungültig identifiziert und eine Information umfasst, welche den Gültigkeitszeitraum der Zustandsinformation definiert. In dieser Ausführungsform wird für jede bereitgestellte Zustandsinformation geprüft, ob ein für die Zustandsinformation festgelegter Prüfzeitpunkt innerhalb des Gültigkeitszeitraumes der jeweiligen Zustandsinformation liegt und ob die Zustandsinformation das jeweils zugeordnete Zertifikat als gültig identifiziert, und das Gerätezertifikat nur bei positivem Prüfergebnis als gültig erkannt.

Die Zustandsinformationen können vorteilhaft zum Zweck der Gültigkeitsprüfung jeweils von einem Zertifikatsauskunftsdienst angefordert werden. Mit besonderem Vorteil umfasst eine bereitgestellte Zustandsinformation einen Positivnachweis der Existenz und Gültigkeit des jeweiligen Zertifikates, d.h. die Kennzeichnung des Zertifikates als gültig durch die Zustandsinformation umfasst vorteilhaft den Nachweis, dass das Zertifikat von einer autorisierten Instanz erzeugt wurde, wobei dieser Nachweis beispielsweise daraus abgeleitet sein kann, dass das Zertifikat oder eine aus dem Zertifikat abgeleitete Information in einer vorbestimmten Datenbank gespeichert ist. Zur Prüfung, ob ein Zertifikat oder eine aus einem Zertifikat abgeleitete Information in einer vorbestimmten Datenbank gespeichert ist, kann der Server, welcher den Zertifikatsauskunftsdienst bereitstellt, vorzugsweise mit der Datenbank über ein Kommunikationsnetzwerk kommunizieren.

Mit besonderem Vorteil sieht das Verfahren zur Gültigkeitsprüfung ein spezielles Gültigkeitsmodell vor, wobei die Prüfzeitpunkte für die Zertifikate der Zertifikatskette und/oder für die zugeordneten Zustandsinformationen auf bestimmte Weise festgelegt werden.

Im einfachsten Fall kann als zugeordneter Prüfzeitpunkt für wenigstens eines der Zertifikate der Zertifikatskette und/oder wenigstens eine der Zustandinformationen der Zeitpunkt festgelegt werden, zu dem die Prüfung der Gültigkeit des Gerätezertifikates durchgeführt wird.

In einer zweiten Variante des Prüfverfahren ist vorgesehen, einen dem Gerätezertifikat zugeordneten digital signierten Zeitstempel bereitzustellen, welcher das Gerätezertifikat mit einem Zeitpunkt verknüpft, wobei als zugeordneter Prüfzeitpunkt für wenigstens eines der Zertifikate der Zertifikatskette der über den Zeitstempel mit dem Gerätezertifikat verknüpfte Zeitpunkt festgelegt wird.

In dieser zweiten Ausführungsvariante wird zusätzlich geprüft, ob der Zeitstempel erfolgreich authentisierbar ist. Ist dies der Fall und auch die oben beschriebene erste Anzahl von Prüfungen wird erfolgreich durchgeführt, so wird das Gerätezertifikat als gültig erkannt, andernfalls als ungültig.

Auch in dieser zweiten Ausführungsvariante kann vorteilhaft für wenigstens ein Zertifikat der Zertifikatskette eine zugeordnete, digital signierte Zustandsinformation bereitgestellt werden, wobei die Zustandsinformation das Zertifikat als gültig oder ungültig identifiziert und eine Information umfasst, welche den Gültigkeitszeitraum der Zustandsinformation definiert. Wie oben bereits für die erste Ausführungsvariante beschrieben, wird in dieser Ausführungsform für jede bereitgestellte Zustandsinformation geprüft, ob ein für die Zustandsinformation festgelegter Prüfzeitpunkt innerhalb des Gültigkeitszeitraumes der jeweiligen Zustandsinformation liegt und ob die Zustandsinformation das jeweils zugeordnete Zertifikat als gültig identifiziert, und das Gerätezertifikat nur bei positivem Prüfergebnis als gültig erkannt. Auch in dieser Ausführungsvariante umfasst eine bereitgestellte Zustandsinformation vorzugsweise einen Positivnachweis der Existenz und Gültigkeit des jeweiligen Zertifikates.

Besonders vorteilhaft kann auch als zugeordneter Prüfzeitpunkt für wenigstens eine der Zustandinformationen der über den digital signierten Zeitstempel mit dem Gerätezertifikat verknüpfte Zeitpunkt festgelegt werden.

In einer besonders vorteilhaften Ausführungsform des Verfahrens wird als zugeordneter Prüfzeitpunkt für das Gerätezertifikat der Zeitpunkt festgelegt, zu dem die Prüfung der Gültigkeit des Gerätezertifikates durchgeführt wird, und für alle weiteren Zertifikate der Zertifikatskette wird der über den authentisierten Zeitstempel mit dem Gerätezertifikat verknüpfte Zeitpunkt festgelegt. Insbesondere wird der Zeitpunkt der Prüfung nur mit dem Gültigkeitszeitraum des Gerätezertifikates verglichen, während für alle anderen Gültigkeitskriterien auch des Gerätezertifikates die Zeitangabe aus dem Zeitstempel verwendet wird, d.h. dass in dieser Ausführungsform insbesondere keine Sperrinformation für das Gerätezertifikat betrachtet wird.

Ferner kann vorteilhaft vorgesehen sein, dass als zugeordneter Prüfzeitpunkt für wenigstens eines der Zertifikate der Zertifikatskette und/oder für die diesem Zertifikat zugeordnete Zustandsinformation der Zeitpunkt festgelegt wird, zu dem das in der Zertifikatskette vorhergehende Zertifikat erstellt wurde oder zu dem der Gültigkeitszeitraum des in der Zertifikatskette vorhergehenden Zertifikates beginnt.

Für das bei der Gültigkeitsprüfung eingesetzte Gültigkeitsmodell kann auch eine Kombination der oben beschriebenen Varianten vorgesehen sein.

Mit besonderem Vorteil ist das Gültigkeitsmodell derart ausgestaltet, dass alle zur Gültigkeitsprüfung des Gerätezertifikates benötigten Informationen zum Zeitpunkt der Erstellung des Gerätezertifikates eingeholt werden können. Diese Informationen umfassen insbesondere alle Zertifikate der zur Authentisierung des Gerätezertifikates eingesetzten Zertifikatskette, jeweils zugeordnete Zustandsinformationen, sowie gegebenenfalls erforderliche Nachweise zur Prüfung der Gültigkeit der Zustandsinformationen. Bei Einsatz eines Zeitstempels umfassen die Informationen insbesondere auch alle Auskünfte und Nachweise, die zur Authentisierung des Zeitstempels selbst erforderlich sind.

Je nach Einsatzzweck kann das Gerätezertifikat die Funktion eines Echtheitszertifikates oder Besitzzertifikates aufweisen und/oder in Form eines Attributzertifikates ausgebildet sein, wobei ein Echtheitszertifikat typischerweise vom Gerätehersteller ausgestellt wird, um einem Gerätebesitzer die Prüfung der Echtheit eines Gerätes zu ermöglichen, ein Besitzzertifikat zur Besitzkennzeichnung vom Gerätebesitzer selbst ausgestellt wird, und ein Attributzertifikat zur Bestätigung einer bestimmten Eigenschaft eines Gerätes dient, beispielsweise zur Bestätigung, dass in einem Gerät ein bestimmtes Modul, zum Beispiel ein TPM-Chip, integriert ist.

Vorzugsweise umfasst die Zertifikatskette wenigstens ein Zwischenzertifikat, welches in der durch die Zertifikatskette definierten Reihenfolge zwischen dem Gerätezertifikat und dem vertrauenswürdigen Zertifikat angeordnet ist, wobei das vertrauenswürdige Zertifikat vorzugsweise ein selbstsigniertes Wurzelzertifikat ist. Das Zwischenzertifikat dient insbesondere der Authentisierung eines vom Gerätehersteller zum Signieren von Gerätezertifikaten eingesetzten Signierschlüssels, nachfolgend als Manufacturer's Attestation Key (MAKey) bezeichnet. Die eingesetzten MAKeys können auch in mehreren Hierarchieebenen strukturiert sein, wobei die Zertifikatskette dann mehrere Zwischenzertifikate umfasst.

Es kann auch ganz auf Zwischenzertifikate verzichtet werden, beispielsweise wenn die Gerätezertifikate direkt mit einem Wurzelschlüssel signiert werden.

Das oben genannte technische Problem wird ferner durch ein System zum Erstellen von Gerätezertifikaten für elektronische Geräte gelöst, wobei das System dazu ausgebildet ist, das oben beschriebene Verfahren zum Erstellen von Gerätezertifikaten für elektronische Geräte auszuführen. Dementsprechend umfasst das System einen Produktionscomputer mit einem darin gespeicherten Signierschlüssel zum Erzeugen von Gerätezertifikaten für elektronische Geräte, wobei der Produktionscomputer dazu ausgebildet ist, auf einen Speicher des jeweiligen elektronischen Gerätes zuzugreifen. Zu diesem Zweck ist der Produktionscomputer mit wenigstens einem elektronischen Gerät verbindbar, vorzugsweise über ein Kommunikationsnetzwerk.

Ferner umfasst das System in einer ersten Variante eine mit dem Produktionscomputer verbindbare Datenbank, in welcher der Produktionscomputer erzeugte Gerätezertifikate oder daraus abgeleitete Werte speichert, wobei die Datenbank dazu ausgebildet ist, auf Anfrage eine Information bereitzustellen, ob ein angefragtes Gerätezertifikat oder ein aus einem angefragten Gerätezertifikat abgeleiteter Wert in der Datenbank gespeichert ist.

In einer zweiten Variante umfasst das System einen mit dem Produktionscomputer verbindbaren Server, welcher einen Zeitstempeldienst bereitstellt, und welcher auf Anfrage des Produktionscomputers für ein vom Produktionscomputer vorgegebenes Gerätezertifikat einen digital signierten Zeitstempel erzeugt und zum Produktionscomputer überträgt, wobei der Zeitstempel das vorgegebene Gerätezertifikat mit dem Zeitpunkt verknüpft, zu dem der Zeitstempel erzeugt wird.

In einer besonders bevorzugten Ausführungsform umfasst das System die Merkmale beider oben beschriebenen Varianten.

Das System kann ferner vorteilhaft dazu ausgebildet sein, jede der oben beschriebenen Ausführungsformen des Verfahrens zum Erstellen von Gerätezertifikaten für elektronische Geräte auszuführen und kann zu diesem Zweck weitere geeignete Komponenten umfassen.

Das oben genannte technische Problem wird ferner durch ein Prüfsystem zur Prüfung der Gültigkeit eines Gerätezertifikates gelöst, wobei das Prüfsystem zum Durchführen des oben beschriebenen Verfahrens zur Gültigkeitsprüfung ausgebildet ist. Dementsprechend umfasst das Prüfsystem ein Prüfgerät zum Prüfen der Gültigkeit eines in einem Speicher eines elektronischen Gerätes hinterlegten Gerätezertifikates mittels einer Zertifikatskette, sowie einen Zertifikatsauskunfts-Server, auf welchen das Prüfgerät zugreifen kann, um Zustandsinformationen für wenigstens ein Zertifikat der Zertifikatskette abzufragen. Das Prüfgerät umfasst zu diesem Zweck vorteilhaft eine entsprechende Prüf-Applikation in Form einer Software.

Das Prüfsystem kann ferner vorteilhaft dazu ausgebildet sein, jede der oben beschriebenen Ausführungsformen des Verfahrens zur Gültigkeitsprüfung eines Gerätezertifikates auszuführen und kann zu diesem Zweck weitere geeignete Komponenten umfassen. So kann das Prüfsystem beispielsweise ferner eine Datenbank oder einen Datenbankauszug umfassen, auf welchen der Zertifikatsauskunfts-Server zum Erzeugen von Zustandsinformationen zugreifen kann, welche Positivnachweise umfassen.

Das oben genannte technische Problem wird auch durch ein elektronisches Gerät gelöst, welches einen von außerhalb des Gerätes nicht auslesbaren Speicher mit einem darin gespeicherten Geheimnis, sowie einen auslesbaren Speicher umfasst, wobei in dem auslesbaren Speicher die für die Durchführung des oben beschriebenen Verfahrens zur Gültigkeitsprüfung eines Gerätezertifikates erforderlichen Informationen gespeichert sind, insbesondere das Gerätezertifikat, alle weiteren für die Gültigkeitsprüfung des Gerätezertifikates erforderlichen Zertifikate der Zertifikatskette, sowie Zustandsinformationen und/oder Zeitstempel. Die gespeicherten Informationen sind dabei jeweils in Abhängigkeit der für die jeweilige Ausführungsform des Verfahrens zur Gültigkeitsprüfung erforderlichen Informationen ausgewählt.

Sind in dem elektronischen Gerät alle zum Durchführen einer Prüfung der Gültigkeit eines im Gerät gespeicherten Gerätezertifikates gespeichert, so kann eine Gültigkeitsprüfung mit besonderem Vorteil offline erfolgen, d.h. ohne Zugriff auf weitere Informationsquellen. Insbesondere kann auch auf einen Zugriff auf einen Zertifikatsauskunfts-Server verzichtet werden, so dass ein Prüfsystem in diesem Fall besonders vorteilhaft nur das Prüfgerät und das zu prüfende elektronische Gerät umfasst.

Es ist typischerweise nicht erforderlich, das beispielsweise als selbstsigniertes Wurzelzertifikat ausgebildete vertrauenswürdige Zertifikat im Gerät zu speichern, da das Prüfgerät dieses Zertifikat typischerweise selbst kennt.

Mit besonderem Vorteil kann ferner das Prüfgerät durch das zu prüfende Gerät selbst gebildet sein, d.h. das zu prüfende Gerät kann dazu ausgebildet sein, selbst die Gültigkeitsprüfung des gespeicherten Gerätezertifikates durchzuführen und kann dementsprechend zu diesem Zweck eine entsprechende Prüf-Applikation aufweisen.

Auch können die für die Durchführung des oben beschriebenen Verfahrens zur Gültigkeitsprüfung eines Gerätezertifikates erforderlichen Informationen vollständig oder teilweise statt in einem Speicher des Gerätes in einem dem Gerät zugeordneten Speicher gespeichert werden.

Dementsprechend wird das oben genannte technische Problem auch durch ein Speichermedium gelöst, welches einem elektronischen Gerät zugeordnet ist, wobei das elektronische Gerät einen von außerhalb des Gerätes nicht auslesbaren Speicher mit einem darin gespeicherten Geheimnis umfasst, und wobei in dem Speichermedium alle für die Durchführung des oben beschriebenen Verfahrens zur Gültigkeitsprüfung eines Gerätezertifikates erforderlichen Informationen, insbesondere das Gerätezertifikat, alle weiteren für die Gültigkeitsprüfung des Gerätezertifikates erforderlichen Zertifikate der Zertifikatskette, sowie Zustandsinformationen und/oder Zeitstempel, gespeichert sind.

Das Speichermedium kann beispielsweise als eine dem Gerät beigelegte CD ausgebildet sein. Es liegt aber auch jede andere geeignete Form eines Speichermediums im Rahmen der Erfindung. Die Zuordnung des Speichermediums zu dem elektronischen Gerät kann allein durch ein gemeinsames Bereitstellen als Set erfolgen. Das Speichermedium kann aber beispielsweise auch entsprechend gekennzeichnet werden, zum Beispiel durch Speichern oder Aufdrucken einer Seriennummer des Gerätes auf dem Speichermedium.

Durch die Erfindung werden auf besonders einfache Weise Zertifikate automatisch als Fälschung erkannt, die unter unautorisierter Verwendung der zugehörigen Signierschlüssel erzeugt wurden.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines beispielhaften Systems zum Erstellen von Gerätezertifikaten für elektronische Geräte,
- Fig. 2: schematisch eine zur Gültigkeitsprüfung eines Gerätezertifikates eingesetzten Zertifikatskette,
- Fig. 3: eine schematische Darstellung eines beispielhaften Prüfsystems, ausgebildet zur Prüfung der Bindung eines Gerätezertifikates an ein elektronisches Gerät,
- Fig. 4: schematisch zwei getrennte Zertifikatsketten zur Gültigkeitsprüfung bei Verwendung eines Attributzertifikates zu einem Gerätezertifikat,
- Fig. 5a: eine schematische Darstellung einer ersten bevorzugten Ausführungsform eines Systems zum Erstellen von Gerätezertifikaten,
- Fig. 5b: schematisch ein zur Gültigkeitsprüfung von mit einem in Fig. 5a dargestellten System erstellten Gerätezertifikaten ausgebildetes Prüfsystem,
- Fig. 6a: eine schematische Darstellung einer zweiten bevorzugten Ausführungsform eines Systems zum Erstellen von Gerätezertifikaten,
- Fig. 6b: schematisch ein zur Gültigkeitsprüfung von mit einem in Fig. 6a dargestellten System erstellten Gerätezertifikaten ausgebildetes Prüfsystem,
- Fig. 7a: eine schematische Darstellung einer dritten bevorzugten Ausführungsform eines Systems zum Erstellen von Gerätezertifikaten,
- Fig. 7b: schematisch ein zur Gültigkeitsprüfung von mit einem in Fig. 7a dargestellten System erstellten Gerätezertifikaten ausgebildetes Prüfsystem,
- Fig. 8: eine schematische Darstellung der Gültigkeitszeiträume von Zertifikaten und Zustandsinformationen bei Verwendung eines ersten bevorzugten Gültigkeitsmodells,
- Fig. 9: eine schematische Darstellung der Gültigkeitszeiträume von Zertifikaten und Zustandsinformationen bei Verwendung eines zweiten bevorzugten Gültigkeitsmodells,
- Fig. 10: eine schematische Darstellung der Gültigkeitszeiträume von Zertifikaten und Zustandsinformationen bei Verwendung eines dritten bevorzugten Gültigkeitsmodells,
- Fig. 11a: eine schematische Darstellung einer vierten bevorzugten Ausführungsform eines Systems zum Erstellen von Gerätezertifikaten, und
- Fig. 11b: schematisch ein zur Gültigkeitsprüfung von mit einem in Fig. 11a dargestellten System erstellten Gerätezertifikaten ausgebildetes Prüfsystem.

Bei den nachfolgend beschriebenen Ausführungsformen der Erfindung wird davon ausgegangen, dass ein Chiphersteller Trusted Platform Module (TPMs), im Folgenden auch als TPM-Chip oder kurz als TPM bezeichnet, herstellt und vertreibt, welche von ihm jeweils mit einem einmaligen Schlüsselpaar ausgestellt sind, dem sogenannten Endorsement Key (EK) bestehend aus privatem (PRIVEK) und öffentlichem Teil (PUBEK). Der PRIVEK wird im TPM generiert und gespeichert, ohne es je zu verlassen.

Der Gerätehersteller integriert ein TPM in sein Gerät. Dabei erstellt er mit einer eigenen Zertifizierungsstelle (Certification Authority, CA) ein elektronisch signiertes Zertifikat (Endorsement Certificate, EK-Zertifikat) in Form eines Public-Key-Zertifikates, welches den öffentlichen Teil (PUBEK) des Endorsement-Keys digital signiert.

Die Signatur des EK-Zertifikates entsteht unter Verwendung eines privaten Schlüssels, welcher nur dem Gerätehersteller zur Verfügung steht. Dieser private Schlüssel wird im Folgenden als Manufacturer's Attestation Key (MAKey) bezeichnet. Die dem Gerätehersteller eigene Zertifizierungsstelle wird vor dem Erzeugen des EK-Zertifikats dazu genutzt, um den zum MAKey gehörenden öffentlichen Schlüssel ebenfalls mittels Public-Key-Zertifikat als zum Gerätehersteller gehörend zu bestätigen. Das zum MAKey gehörende Zertifikat wird folgend mit MACert bezeichnet. Es wird im Range eines sogenannten Zwischenzertifikates einer Zertifizierungsstelle verwendet (intermediate CA certificate, Sub-CA-Zertifikat). Gegebenenfalls verwendet der Gerätehersteller mehrere private Schlüssel bei der Herstellung, beispielsweise MAKey1, MAKey2, MAKey3 und so weiter. Zu jedem privaten Schlüssel existiert ein entsprechendes Zertifikat, MACert1, MACert2, MACert3 und so weiter. Alle diese Zertifikate sind direkt oder indirekt durch die Zertifizierungsstelle des Herstellers bestätigt, zum Beispiel indem der Wurzelschlüssel der Zertifizierungsstelle, im Folgenden als Manufacturer's Trust Anchor Key, kurz MTAKey, bezeichnet, verwendet wurde, um sie digital zu signieren. Der Wurzelschlüssel wird mit Hilfe eines selbst-signierten Wurzelzertifikates (fortan Manufacturer's Trust Anchor Certificate, kurz MTACert) bestätigt und vom Hersteller veröffentlicht.

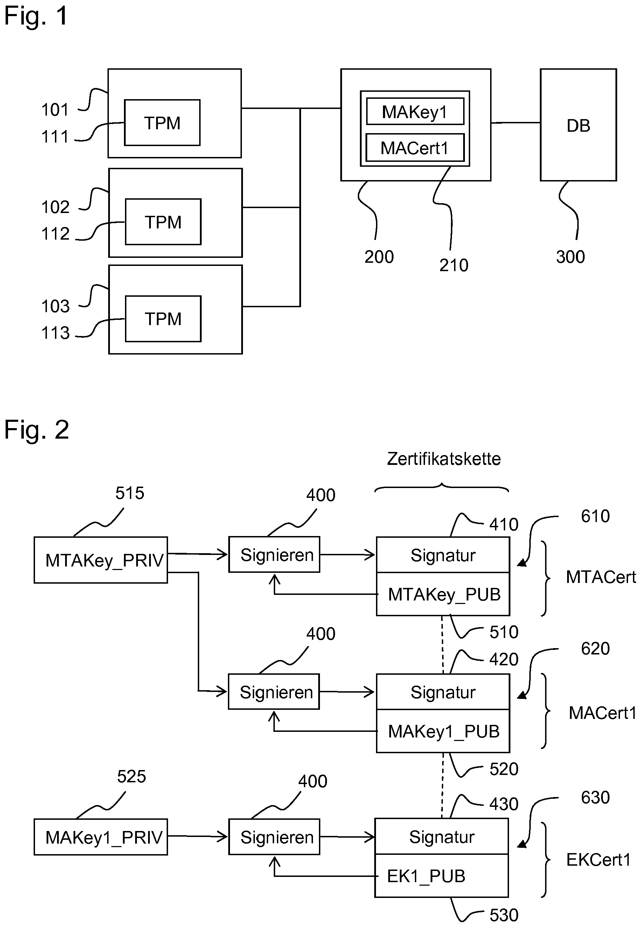

Zu diesem Vorgang ist die Infrastruktur eines Geräteherstellers beispielhaft in Fig. 1 dargestellt. An einem Produktionsarbeitsplatz 200 ist der Schlüssel MAKey1 und das Zertifikat MACert1 im Einsatz, wobei diese in einem Speicher 210 gespeichert sind. Das Zertifikat wurde von einer in Fig. 1 nicht dargestellten, privaten Zertifizierungsstelle ausgestellt, die nun abgeschaltet ist. Am Produktionsarbeitsplatz 200 werden beispielhaft die Geräte 101, 102 und 103 initialisiert, welche bereits zusammengebaut sind und jeweils ein TPM 111, 112 bzw. 113 enthalten, welches wiederum jeweils einen individuellen EK enthält. Zu dem PUBEK eines TPM wird am Produktionsarbeitsplatz 200 mit Hilfe einer Software-Anwendung ein Gerätezertifikat (EKCert1, EKCert2, ...) erzeugt, indem es mit MAKey1 unterschrieben wird. Das Gerätezertifikat wird im dargstellten Ausführungsbeispiel zusammen mit dem MACert1 in persistentem Speicher des Gerätes 101, 102 bzw. 103 abgelegt. Zu diesem Zweck ist der Produktionsarbeitsplatz 200 mit den Geräten 101, 102 und 103 über ein Kommunikationsnetzwerk verbunden, wobei vorzugsweise eine Vielzahl von Geräten gleichzeitig an das Kommunikationsnetzwerk angeschlossen sein können. Alternativ zur Speicherung des Gerätezertifikates und des Zertifikates MACert1 in einem Speicher des Gerätes 101, 102 bzw. 103 können diese Daten auch auf einem Speichermedium wie beispielsweise einer Compact Disc (CD) gespeichert werden, welche dem Gerät zuordenbar ist, beispielsweise dem Gerät beiliegt. Da prinzipiell nur erforderlich ist, dass die Daten in einer dem Gerät zuordenbaren Weise abrufbar bereitgestellt werden, könne die Daten beispielsweise auch mittels eines Verzeichnisdienstes bereitgestellt werden, von welchem sie bei Bedarf abgerufen werden können. Es kann aber auch jede andere geeignete Weise der Bereitstellung eingesetzt erden.

In dem dargestellten Beispiel werden die erzeugten Gerätezertifikate ferner in einer Herstellerdatenbank 300 gespeichert, auf welche vom Produktionsarbeitsplatz 200 zugegriffen werden kann. Die Verbindung zwischen Produktionsarbeitsplatz 200 und Herstellerdatenbank 300 kann dabei über das gleiche oder ein anderes Kommunikationsnetzwerk oder auch über eine Direktverbindung erfolgen.

Später verwendet ein Gerätebesitzer zum Beispiel nach dem Erwerb eines Gerätes den vom Hersteller veröffentlichten Wurzelschlüssel aus dem Wurzelzertifikat (MTACert), um die Echtheit des Gerätes elektronisch zu prüfen. Ein gängiges Verfahren ist beispielsweise, dass der Gerätebesitzer ein Software-Werkzeug verwendet, welches das MTACert kennt und über Kommunikationswege mit dem Gerät von diesem das entsprechende EK-Zertifikat (EKCert1, EKCert2, ...) sowie alle relevanten Zwischenzertifikate, beispielsweise MACert1, erhält. Das Software-Werkzeug prüft dann den Zertifizierungspfad, im Folgenden auch als Zertifikatskette bezeichnet, vom Gerätezertifikat (EK-Zertifikat) bis zum Wurzelzertifikat (MTACert) durch Validierung dieses Pfades, insbesondere gemäß RFC 5280. Damit ist lediglich die Echtheit des EK-Zertifikates bestimmt, eingeschränkt unter der Voraussetzung, dass bis zum Zeitpunkt der Prüfung keiner der vom Hersteller verwendeten privaten Schlüssel (MTAKey und MAKey1, MAKey2, MAKey3, ...) unautorisiert verwendet wurde.

Ein Beispiel für den Zertifizierungspfad ist in Fig. 2 dargestellt. Dementsprechend umfasst die Zertifikatskette das als EKCert1 bezeichnete Gerätezertifikat 630, das als MACert1 bezeichnete Zwischenzertifikat 620 und das als MTACert bezeichnete Wurzelzertifikat 610.

Das Gerätezertifikat 630 umfasst die Zertifikatsinformation 530 und die Signatur 430, welche durch einen Signiervorgang 400 erzeugt wird, bei welchem die Zertifikatsinformation 530 mit dem als MAKey1_PRIV bezeichneten privaten Schlüssel 525 verschlüsselt wird. Der Signiervorgang 400 kann alternativ vorsehen, dass nicht die Zertifikatsinformation 530 digital signiert wird, sondern eine aus der Zertifikatsinformation 530 gebildete kryptographische Prüfsumme, wie zum Beispiel ein Hashwert der Zertifikatsinformation 530, mit dem als MAKey1_PRIV bezeichneten privaten Schlüssel 525 verschlüsselt wird.

Die Zertifikatsinformation 530 des Gerätezertifikates 630 umfasst den öffentlichen Schlüssel EK1_PUB. Zusätzlich kann die Zertifikatsinformation 530 weitere Informationen umfassen, wie zum Beispiel Informationen zur Gültigkeitsdauer des Gerätezertifikates 630, eine Identifikationsinformation des Zertifikatsausstellers, Informationen zum Eigentümer des öffentlichen Schlüssels EK1_PUB, Informationen zu Regeln und Verfahren, unter denen das Gerätezertifikat 630 ausgegeben wurde und/oder Angaben zum zulässigen Anwendungs- und Geltungsbereich des öffentlichen Schlüssels EK1_PUB.

Das Zwischenzertifikat 620 umfasst die Zertifikatsinformation 520 und die Signatur 420, welche durch einen Signiervorgang 400 erzeugt wird, bei welchem die Zertifikatsinformation 520 oder eine aus der Zertifikatsinformation 520 gebildete kryptographische Prüfsumme mit dem als MTAKey_PRIV bezeichneten privaten Schlüssel 515 verschlüsselt wird. Die Zertifikatsinformation 520 des Zwischenzertifikates 620 umfasst zumindest den öffentlichen Schlüssel MAKey1_PUB, sowie gegebenenfalls weitere Informationen analog zu den oben bezüglich der Zertifikatsinformation 530 beschriebenen Informationen.

Das Wurzelzertifikat 610 umfasst die Zertifikatsinformation 510 und die digitale Signatur 410. Das Wurzelzertifikat 610 ist selbstsigniert, d.h. die digitale Signatur wird durch einen Signiervorgang 400 erzeugt, bei welchem die Zertifikatsinformation 510 oder eine aus der Zertifikatsinformation 510 gebildete kryptographische Prüfsumme mit MTAKey PRIV verschlüsselt wird. Die Zertifikatsinformation 510 des Wurzelzertifikates 610 umfasst zumindest den öffentlichen Schlüssel MTAKey PUB, sowie analog zu den oben beschriebenen Zertifikatsinformationen 530 und 520 gegebenenfalls weitere Informationen.

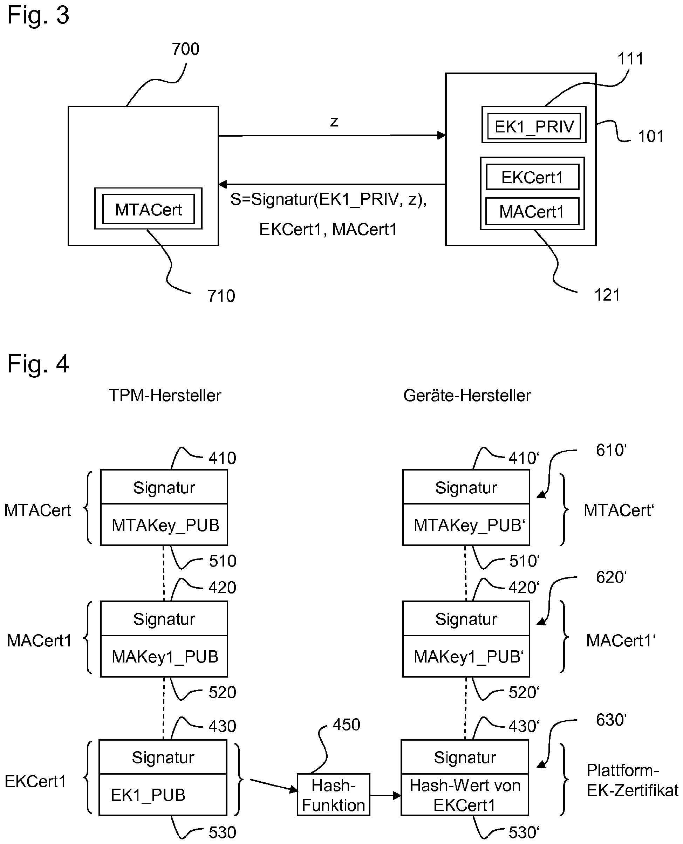

Wie in Fig. 3 dargestellt, stellt das Software-Werkzeug in einem nächsten Schritt sicher, dass das EK-Zertifikat EKCert1 auch wirklich zum vorliegenden Gerät 101 gehört. Hierzu können verschiedene Verfahren eingesetzt werden. Beispielsweise fordert das beispielsweise in einem Prüfcomputer 700 installierte Software-Werkzeug das Gerät 101 über einen Kommunikationskanal auf, eine vom Software-Werkzeug generierte Zufallszahl z mit Hilfe des im TPM 111 gespeicherten privaten Schlüssels PRIVEK, im dargestellten Beispiel als EK1_PRIV bezeichnet, zu signieren. Technisch bedeutet dies eine Verschlüsselung der Zufallszahl z bzw. eines in Abhängigkeit von z gebildeten Wertes mittels PRIVEK. Der in Abhängigkeit der Zufallszahl z gebildete Wert kann beispielsweise eine kryptographische Prüfsumme von z oder eine kryptographische Prüfsumme von z und weiteren Informationen sein, wobei die kryptographische Prüfsumme beispielsweise ein Hashwert ist, und wobei die zusätzlichen Informationen geräteseitig bekannt und gegebenenfalls auch öffentlich bekannt sein können. Sobald das Gerät 101 die Signatur S zurück übermittelt, prüft das Software-Werkzeug die Signatur, indem es mittels des im dargestellten Beispiel als EK1_PUB bezeichneten öffentlichen Schlüssels PUBEK, welcher im EK-Zertifikat EKCert1 enthalten ist, die Zufallszahl z bzw. die aus z gebildete kryptographische Prüfsumme aus der Signatur S entschlüsselt und mit der ursprünglichen Zufallszahl z bzw. mit einer in Abhängigkeit der ursprünglichen Zufallszahl z gebildeten kryptographischen Prüfsumme vergleicht. Zu diesem Zweck werden im dargestellten Ausführungsbeispiel zusammen mit der Signatur S die im Speicher 121 gespeicherten Zertifikate EKCert1 und MACert1 vom Gerät 101 zum Prüfcomputer 700 übertragen. Das Zertifikat MTACert ist typischerweise bereits in einem Speicher 710 des Prüfcomputers 700 gespeichert.

Gemäß Spezifikation des TPM-Chips ist der PRIVEK nicht aus dem TPM 111 extrahierbar und global einmalig. Demnach ist mit dem beschriebenen Verfahren die Echtheit des Gerätes 101 bestimmt unter den bereits genannten Einschränkungen und sofern der TPM-Chip 111 nicht aus dem Gerät 101 entfernt und in ein anderes Gerät integriert wurde.

Hersteller von TPM-Chips erstellen häufig bereits bei der Produktion der Chips jeweils ein EK-Zertifikat. In diesem Fall werden also EK und EK-Zertifikat beim Hersteller des TPM-Chips erzeugt. Der Unterschied zu dem oben beschriebenen Fall besteht darin, dass an zwei Stellen eine Zertifizierungsstelle (CA) benötigt wird, um die Echtheit zu bestätigen. Eine Zertifizierungstelle wird beim Hersteller von TPM-Chips und ein anderes Mal beim Hersteller von Geräten benötigt. Weiter kann beim Gerätehersteller auf das Ausstellen eines Public-Key-Zertifikates verzichtet werden. Der Gerätehersteller stellt stattdessen ein Attributzertifikat zum bestehenden EK-Zertifikat aus, mit dem er bestätigt, dass ein bestimmtes TPM in einem bestimmten Gerät verbaut wurde. Das Attributzertifikat wird als Plattform-EK-Zertifikat bezeichnet.

Der Mehrwert für den späteren Gerätebesitzer besteht darin, dass separat die Echtheit des TPM-Chips als auch die Echtheit des Gerätes überprüft werden kann. Dabei werden zwei Wurzelzertifikate benötigt und zwei Zertifikatsketten geprüft aber nur eine Signatur verifiziert. Die beiden Zertifikatsketten sind in Fig. 4 dargestellt. Dort existiert die Verbindung zwischen dem Plattform-EK-Zertifikat ohne öffentlichen Teil EK1_PUB von EK1 und dem EKCert1 mit öffentlichem Teil EK1_PUB von EK1 aufgrund einer Referenz, zum Beispiel in Form einer Zertifikatsnummer zusammen mit einem kryptographischen Hash-Wert, der über den Inhalt von EKCert1 berechnet und im Plattform-EK-Zertifikat enthalten ist. Die auf der linken Seite der Fig. 4 dargestellte Zertifikatskette zur Authentisierung des vom TPM-Hersteller erzeugten EK-Zertifikates EKCert1 entspricht der in Fig. 2 dargestellten Zertifikatskette. Der mittels einer Hash-Funktion 450 aus EKCert1 erzeugte Hash-Wert 530' bildet die Zertifikatsinformation des Plattform-EK-Zertifikates 630', welches ferner die Signatur 430' umfasst. Das Plattform-EK-Zertifikates 630', sowie die weiteren Zertifikate 620' und 610', umfassend die Zertifikatsinformationen 520' bzw. 510' und die Signaturen 420' bzw. 410', werden analog zu der in Fig. 2 dargestellten Zertifikatskette gebildet.

Bestimmte Geräte können private Schlüssel auch ohne TPM-Chip sicher verwahren. In solchen Fällen aber auch bei Geräten mit TPM besteht die Möglichkeit, dass während der Herstellung der Geräte jeweils ein neues Geheimnis erzeugt und durch den Hersteller mit einem Gerätezertifikat versehen wird. Zum Beispiel kann anstelle des oder zusätzlich zum Endorsement-Key (EK) ein neues asymmetrisches Schlüsselpaar erzeugt werden und der öffentliche Schlüssel durch ein Zertifikat des Herstellers wie oben beschrieben bestätigt werden. Wenn ein TPM vorhanden ist, kann dieses neue Schlüsselpaar auch kryptographisch an das TPM gebunden werden. In beiden Fällen besteht eine Zertifikatskette wie oben beschrieben. Der Hersteller stellt ein Public-Key-Zertifikat aus. In dieser Variante ist es aber unabhängig von einem öffentlichen Schlüssel, der anderswo erzeugt wurde. Insbesondere hat es keine Verbindung zu einem öffentlichen Teil eines EK, der von einem TPM-Hersteller erzeugt wurde. Die Unabhängigkeit mag als Vorteil angesehen werden. Jedoch ist der Gerätehersteller dann für die Einmaligkeit des Schlüsselpaares verantwortlich.

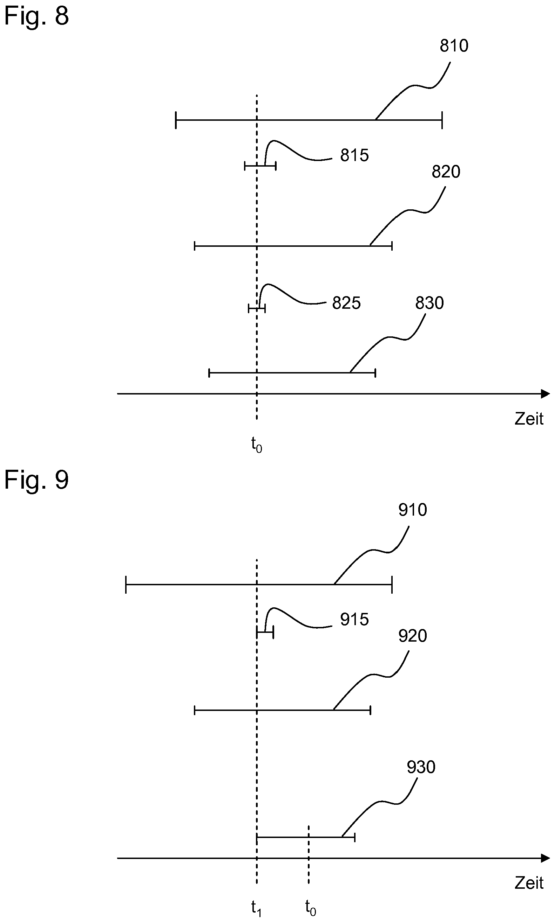

Die relevanten Gültigkeitszeiträume bei Einsatz eines PKIX-Verfahrens sind beispielhaft in Fig. 8 dargestellt. Üblicherweise haben die Wurzelzertifikate einen sehr langen Gültigkeitszeitraum 810 von mehreren Jahren. Für das PKIX-Verfahren umfasst der Gültigkeitszeitraum von Wurzelzertifikaten denjenigen aller abhängigen Zertifikate.

So umfasst die in Fig. 8 dargestellte Gültigkeitsdauer 810 für das Zertifikat MTACert auch diejenigen für die Zertifikate MACert1 und EKCert1, welche für MACert1 mit Bezugszeichen 820 und für EKCert1 mit Bezugszeichen 830 bezeichnet sind. Für Sub-CA-Zertifikate gilt ebenfalls, dass ihr Gültigkeitszeitraum denjenigen aller abhängigen Zertifikate umfasst. In Fig. 8 umfasst dementsprechend die Gültigkeit von MACert1 jene von EKCert1.

Sobald eine Zertifikatskette bestehend aus MTACert, MACert1 und EKCert1 zu einem Zeitpunkt t₀ auf Gültigkeit überprüft wird muss nach PKIX der Zeitpunkt t₀ innerhalb der Gültigkeitszeiträume aller dieser Zertifikate liegen. Werden Sperrauskünfte berücksichtigt, so muss der Zeitpunkt t₀ ebenfalls innerhalb deren Gültigkeitszeitraum liegen. Fig. 8 zeigt, dass für alle vom Wurzelzertifikat MTACert direkt abhängigen Zertifikate, hier beispielsweise MACert1, eine Sperrliste (Certificate Revcation List, CRL) während des Prüfverfahrens eingeholt wurde. Diese Sperrliste kann nach PKIX zum Beispiel mit dem zu MTACert gehörenden MTAKey signiert worden sein. Weil üblicherweise der Schlüssel für Wurzelinstanzen sehr selten verwendet und ansonsten sicher außerhalb des operativen Betriebes verwahrt wird, hat eine Sperrliste, die von der Wurzelinstanz herausgegeben wurde, im praktischen Betrieb oftmals eine relativ lange Gültigkeitsdauer 815 zum Beispiel von Tagen. Für alle anderen Zertifikate werden in der Regel einzelne Sperrauskünfte bezogen auf dieses Zertifikat jeweils von der ausstellenden Instanz auf Anfrage, zum Beispiel per OCSP, bereitgestellt, deren Datenvolumen relativ gering ist. Ihr Gültigkeitszeitraum 825 ist relativ kurz, zum Beispiel eine Stunde.

Ursprünglich wurde die Prüfung von Zertifikatsketten nicht für die langfristige Verifikation von Zertifikaten vorgesehen. Das Prüfverfahren ist für die Ad-hoc-Verifikation der Identität von Kommunikationspartnern beim Verbindungsaufbau optimiert. Für Gerätezertifikate eignet es sich ohne weitere Modifikationen schon deshalb nicht, weil es besonders im industriellen Bereich schwierig ist, die maximale Lebensdauer von Geräten vorherzusehen und für die üblicherweise langfristigen Zeiträume hinreichend starke und damit dauerhafte kryptographische Algorithmen zu verwenden, die von gängigen Implementierungen auch unterstützt werden. Nach PKIX-Standard ist zudem beispielsweise ein Wurzel- oder Sub-CA-Zertifikat mit einem restlichen Gültigkeitszeitraum von 3 Jahren nicht geeignet, um davon abhängig noch Zertifikate mit einem Gültigkeitszeitraum von 5 Jahren auszustellen, weil der Gültigkeitszeitraum abhängiger Zertifikate innerhalb des Gültigkeitszeitraums des übergeordneten Zertifikates liegen muss.

Die Erfindung sieht dementsprechend im Unterschied zum PKIX-Standard insbesondere vor, dass Zustandsauskünfte Positivnachweise erbringen und/oder Zertifikate nur zu dem Zeitpunkt der Ausstellung damit zu prüfender Signaturen gültig gewesen sein müssen. Der zweite Punkt ermöglicht, dass der Gültigkeitszeitraum von Zertifikaten nicht innerhalb des Gültigkeitszeitraumes des Zertifikates des Ausstellers liegen muss, sondern länger sein kann.

Durch die Erfindung sollen im Idealfall Zertifikate automatisch als Fälschung erkannt werden, die unter unautorisierter Verwendung der zugehörigen Signierschlüssel erzeugt wurden.

Der absichtliche oder versehentliche Missbrauch von Manufacturer Attestation Keys (MAKeys), wie sie oben beschrieben sind, stellt ein relativ hohes Risiko für den Gerätehersteller dar. Denn die MAKeys sind üblicherweise in großen Produktionshallen mit komplexen IT-Netzwerken in Verwendung. Zwar können MAKeys mit Hilfe von sicheren Signaturerstellungseinheiten wie sogenannte Crypto-Tokens oder Smart-Cards sicher verwahrt werden, so dass ein Kopieren des privaten Anteils mit einer vernachlässigbaren Restwahrscheinlichkeit unmöglich ist. Dennoch besteht die Gefahr, dass die Schlüssel unbefugt verwendet werden. Insbesondere bei Auftragsfertigungen außerhalb der direkten Kontrolle eines Rechteinhabers besteht die reale Gefahr der Überproduktion und des Verkaufs der Ware auf eigene Rechnung. Es besteht das Risiko des Schadens durch entgangenes Geschäft. Wenn die Plagiate auch noch von minderer Qualität sind, entsteht zusätzliches Risiko durch die erhöhte Wahrscheinlichkeit von Produkthaftungsfällen und das Risiko des Imageverlustes.

Durch die Erfindung wird eine kostengünstige Vorsorge bereitgestellt für den Fall der Kompromittierung von Signierschlüsseln, wie zum Beispiel MAKey1, MAKey2, MAKey3, etc., zur Erstellung von Gerätezertifikaten.

Insbesondere können Plagiate ohne außerordentliche Maßnahmen des legitimen Geräteherstellers oder Rechteinhabers als solche erkannt werden, obwohl sie mit einem Gerätezertifikat versehen sind, das missbräuchlich mit einem korrekten Signierschlüssel erstellt wurde.

Insbesondere im industriellen Bereich besteht ferner die Gefahr der missbräuchlichen Verwendung von Device Owner Attestation Keys (DOAKeys) wie sie oben beschrieben sind. Denn an einer Vielzahl von industriellen Standorten ist eine Vielzahl von Geräten im Einsatz, so dass mit relativ hoher Frequenz Ersatzgeräte in Betrieb genommen oder neue hinzugefügt werden müssen. Entsprechend müssen für den praktikablen Einsatz Geräte vor Ort mit Gerätezertifikaten versorgt werden können und deshalb befinden sich manche DOAKeys im Feldeinsatz, wo die Überwachung ihrer Verwendung nicht immer mit größter Sorgfalt möglich ist.

Die Erfindung stellt für dieses Anwendungsgebiet gleichfalls eine kostengünstige Vorsorge für den Fall der Kompromittierung von Signierschlüsseln zur Erstellung von Gerätezertifikaten, wie zum Beispiel DOAKey1, DOAKey2, DOAKey3, etc., bereit.

Insbesondere erkennt der Gerätebesitzer ohne außerordentliche Maßnahmen, dass sich ein Gerät in seinem Besitz befindet, dessen Gerätezertifikat ohne seine Zustimmung erstellt wurde, also zum Beispiel durch missbräuchliche Verwendung des korrekten Signierschlüssels. Für Angreifer ist es interessant, manipulierte Geräte in den Bestand eines Besitzers einzuschleusen. Für sie ist es umso vorteilhafter, wenn solche Geräte nicht erkannt werden.

Die Erfindung sieht insbesondere die folgenden Varianten vor:
1. Das Prüfverfahren nach PKIX-Standard wird um das Erfordernis einer Zustandsauskunft für Gerätezertifikate erweitert, wobei die Zustandsauskunft einen Positivnachweis der Existenz und Gültigkeit des Gerätezertifikates enthält.
2. Ein spezielles Gültigkeitsmodell für Gerätezertifikate wird angewendet, wobei auf das Erfordernis eines Positivnachweises in der Zustandsauskunft zum Gerätezertifikat verzichtet wird. Als Ersatz dient ein elektronischer Zeitstempel, welcher den Ausstellungszeitpunkt des Gerätezertifikates dokumentiert und von einem anderen Signierschlüssel unterschrieben wurde als das Gerätezertifikat.
3. Gerätezertifikate werden zusammen mit einem Existenznachweis und einem Zeitstempel erstellt und es wird ein spezielles Gültigkeitsmodell angewendet. Diese Variante stellt somit eine Kombination der ersten zwei Varianten dar.

Insbesondere für die zweite und dritte Variante sieht die Erfindung ferner mit besonderem Vorteil vor, die Prüfung der Gerätezertifikate ohne die Notwendigkeit zur Einholung von weiteren Zustandsinformationen zu Zertifikaten und daher unabhängig von Kommunikationsnetzen zu ermöglichen.

Die nachfolgend beschriebene Variante der Erfindung basiert auf einer Kombination der Prüfung von Gerätezertifikaten nach PKIX-Standard mit dem zusätzlichen Erfordernis einer Zustandsauskunft über die Existenz des Gerätezertifikates.

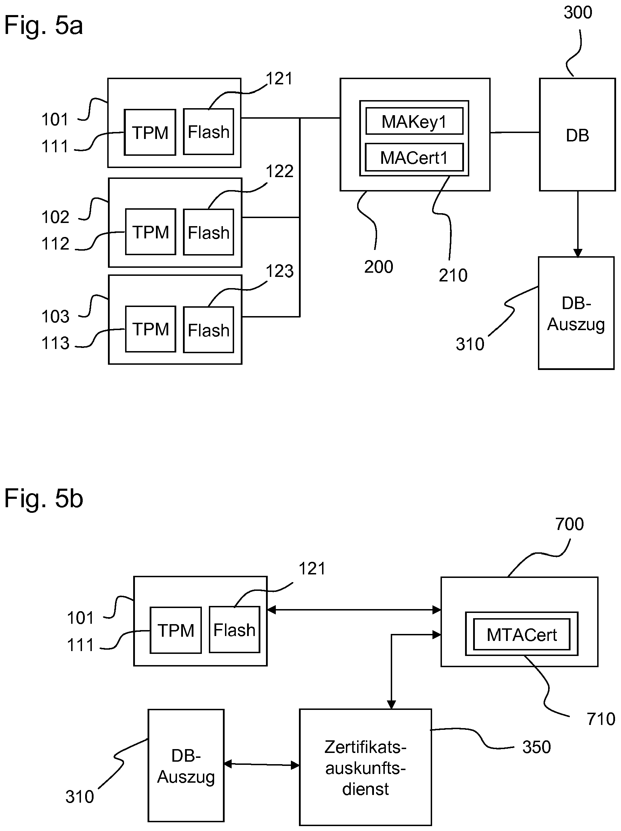

Ein für diese Variante einsetzbares System zum Erstellen von Gerätezertifikaten ist beispielhaft in Fig. 5a dargestellt, und ein entsprechendes System zur Gültigkeitsprüfung zum Einsatz beim Gerätebesitzer ist beispielhaft in Fig. 5b dargestellt.

Ein Verfahren zum Erstellen von Gerätezertifikaten in Verbindung mit einem entsprechenden Verfahren zur Prüfung der Gültigkeit eines so erstellten Gerätezertifikates, umfasst beispielhaft die folgenden Schritte:
1. Ein Gerätehersteller produziert Geräte 101, 102 und 103 und stellt dabei mit Hilfe eines MAKey, im dargestellten Ausführungsbeispiel MAKey1, für jedes Gerät ein Gerätezertifikat aus. Die Ausstellung eines Gerätezertifikates erfolgt dabei wie oben beschrieben.
2. Nach der Produktion und dem Test werden für die produzierte Charge von Geräten alle Gerätezertifikate in der Gerätedatenbank 300 des Herstellers hinterlegt. Hierbei erfolgt eine Prüfung möglichst von unabhängiger Stelle, dass die Anzahl der produzierten Geräte zu dem Produktionsauftrag passt, und nur wenn die Anzahl passt, werden die Gerätezertifikate in die Datenbank aufgenommen.
3. Optional erzeugt ein Automatismus einen Auszug 310 aus der Gerätedatenbank 300, in dem im Wesentlichen nur die Gerätezertifikate enthalten sind. Dieser Auszug wird durch übliche Datensicherheitsmaßnahmen geschützt. Er dient als Grundlage für einen Zertifikatsauskunftsdienst 350, den der Hersteller öffentlich zugänglich betreibt und der vom Geräteeigentümer zur Prüfung von Gerätezertifikaten benötigt wird.
4. Die Geräte 101, 102 und 103 der Charge werden zum Verkauf freigegeben, zum Beispiel indem sie in das Warenlager des Herstellers überführt werden.
5. Eine Person empfängt ein Gerät 101, zum Beispiel durch eine Bestellung beim Hersteller und dessen Lieferung. Die Person wird damit zum Gerätebesitzer.
6. Der Gerätebesitzer prüft die Zertifikatskette des Gerätes 101 und die Bindung des EK-Zertifikates an das Gerät 101 mit einem vom Hersteller dokumentierten Verfahren unter Verwendung des Zertifikates MTACert als Vertrauensanker. Dieser Schritt ist oben im Detail beschrieben. Der Gerätebesitzer verwendet hierfür zum Beispiel ein Software-Werkzeug, welches das MTACert kennt oder welches er ihm bekannt macht. Das Software-Werkzeug kann zum Beispiel der Gerätehersteller zur Verfügung stellen.
7. Der Gerätebesitzer holt nach einem vom Gerätehersteller dokumentierten Verfahren bei einem Auskunftsdienst 350 des Geräteherstellers einen Existenznachweis für das Gerätezertifikat ein, zum Beispiel mit Hilfe eines Software-Werkzeuges über das Protokoll OCSP. Der Auskunftsdienst 350 schlägt das Zertifikat in dem Auszug 310 aus der Gerätedatenbank 300 nach oder direkt in der Gerätedatenbank 300 und stellt die gewünschte Auskunft bereit.

Die Verwendung eines Auszuges 310 aus der Gerätedatenbank 300 ist somit optional. Solch ein Auszug 310 wird vorteilhaft verwendet, damit ein öffentlicher Dienst nicht direkt auf eine unternehmensinterne Datenbank 300 zugreifen muss und damit Zugriffe auf den Dienst nicht direkt die Datenbank 300 belasten.

Die Schritte 6 und 7 werden zu einem Zeitpunkt nach Wahl des Gerätebesitzers durchgeführt und beliebig wiederholt.

Die Wirkung des oben beschriebenen Verfahrens wird offensichtlich, wenn eine angenommene missbräuchliche Verwendung eines korrekten MAKeyl zum Zwecke der Erstellung von gefälschten Gerätezertifikaten betrachtet wird. Die gefälschten Gerätezertifikate würden bei Schritt 2 nicht in die Datenbank 300 eingefügt werden, zum Beispiel weil bei dem Vergleich mit dem Produktionsauftrag eine Diskrepanz auffällt oder weil die missbräuchliche Verwendung des MAKeyl ohne Zugriffsmöglichkeit auf die Datenbank 300 geschieht, zum Beispiel außerhalb der Produktionsstätte. Bei Schritt 7 fällt der Existenznachweis zum gefälschten Gerätezertifikat negativ aus und der Gerätebesitzer erkennt das Plagiat. Die Wirksamkeit des Verfahrens wird somit insbesondere durch die Schritte 2 und 7 erreicht.

Das Verfahren schützt auch dann, wenn der MAKeyl nicht entwendet oder kopiert, sondern sporadisch und unentdeckt missbräuchlich verwendet wird.

Im Folgenden ist eine Variante des obigen Verfahrens beschrieben, das sich besonders eignet, wenn Geräte von einem Auftragnehmer des Inhabers an den Schutzrechten produziert werden.

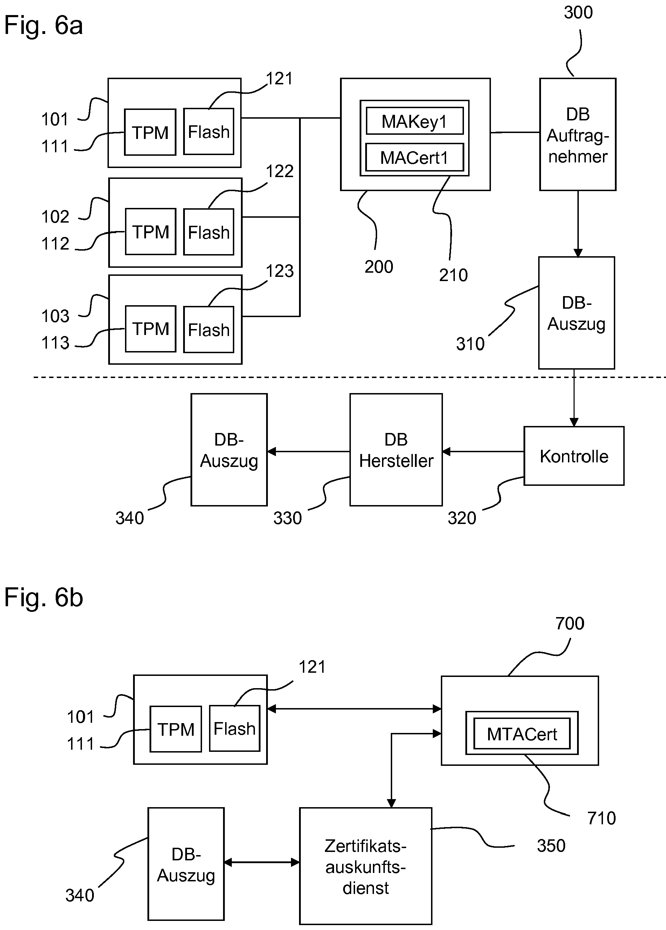

Ein für diese Variante einsetzbares System zum Erstellen von Gerätezertifikaten ist beispielhaft in Fig. 6a dargestellt, und ein entsprechendes System zur Gültigkeitsprüfung zum Einsatz beim Gerätebesitzer ist beispielhaft in Fig. 6b dargestellt.

Ein entsprechendes Verfahren zum Erstellen von Gerätezertifikaten in Verbindung mit einem entsprechenden Verfahren zur Prüfung der Gültigkeit eines so erstellten Gerätezertifikates, umfasst beispielhaft die folgenden Schritte:
1. Ein Auftragnehmer fertigt im Auftrag des Schutzrechteinhabers bzw. Herstellers eine Charge von Geräten 101, 102 und 103. Am Produktionsarbeitsplatz 200 wird mit Hilfe eines vom Hersteller bereitgestellten MAKeyl und zugehörigem MACert1 für jedes Gerät 101, 102 und 103 ein Gerätezertifikat ausgestellt.
2. Der Auftragnehmer pflegt eine partielle Datenbank 300 mit den EK-Zertifikaten aller von ihm produzierten Geräte 101, 102 und 103.
3. Der Auftragnehmer erstellt für jede Charge von Geräten einen Auszug 310 aus dieser Datenbank 300, in dem die Gerätezertifikate enthalten sind.
4. Der Auftragnehmer stellt dem Hersteller diese Auszüge zur Verfügung.
5. Der Hersteller kontrolliert die Auszüge, indem er sie mit den von ihm vergebenen Produktionsaufträgen mit Hilfe eines Kontrollsystems 320 vergleicht. Zum Beispiel akzeptiert er Auszüge 310 nur, wenn die Menge der gemeldeten Geräte zu den Aufträgen passt. Nur in dem Fall fügt er die Gerätezertifikate und eventuell weitere Information seiner Gerätedatenbank 330 hinzu.
6. Optional erstellt der Hersteller einen Auszug 340 aus seiner Gerätedatenbank 330 zur Verwendung für den Auskunftsdienst 350, den er zu seinen Gerätezertifikaten betreibt.
7. Die Charge der neu produzierten Geräte wird nach der Kontrolle durch den Hersteller zum Vertrieb freigegeben, zum Beispiel indem sie in das Warenlager beim Auftragnehmer übernommen werden.
8. Eine Person empfängt ein Gerät 101, zum Beispiel durch Bestellung beim Hersteller und Auslieferung durch den Auftragnehmer. Die Person wird damit zum Gerätebesitzer.
9. Der Gerätebesitzer prüft die Echtheit des Gerätes 101 durch Prüfung der Zertifikatskette und Prüfung der Bindung des EK-Zertifikates an das Gerät 101 wie oben beschrieben.
10. Der Gerätebesitzer holt einen Existenznachweis zum Gerätezertifikat beim Hersteller ein, wie oben beschrieben. Die Sicherheit des Verfahrens liegt hier analog zu der vorher beschriebenen Variante insbesondere in den Schritten 5 und 10. Die Kontrolle der Anzahl der Gerätezertifikate beim Hersteller als Auftraggeber vor deren Einfügung in seine Gerätedatenbank 330 ist für die Variante des Verfahrens wesentlich, denn damit wird die unautorisierte Überproduktion von Geräten verhindert. Hinzu kommt, dass der Gerätebesitzer den Existenznachweis exakt bei demjenigen Auskunftsdienst 350 einholt, welchen der Hersteller unter seiner Kontrolle hat. Zum Beispiel ist das Verfahren zum Einholen des Existenznachweises in der Dokumentation zu den Geräten entsprechend offensichtlich beschrieben oder das Software-Werkzeug zum Prüfen der Gerätezertifikate stammt vom Hersteller und verwendet nur den Auskunftsdienst 350 des Herstellers.

Die oben beschriebenen Verfahren zum Existenznachweis für Echtheitszertifikate können analog auch für Besitzzertifikate verwendet werden, wobei dann die folgenden Modifikationen vorgesehen sind:
- Der Gerätebesitzer produziert die Geräte nicht, sondern personalisiert sie lediglich durch Kennzeichnung mit Besitzzertifikaten.
- Nicht der Gerätehersteller oder Auftragnehmer erstellt die Gerätezertifikate, sondern der Gerätebesitzer mit Hilfe eines DOAKey wie oben beschrieben.
- Nicht der Gerätehersteller oder Auftragnehmer pflegt eine Gerätedatenbank mit den Gerätezertifikaten, sondern der Gerätebesitzer.
- Nicht der Gerätehersteller betreibt einen Zertifikatsauskunftsdienst für Existenznachweise zu den Gerätezertifikaten, sondern der Gerätebesitzer.
- Nicht der Gerätehersteller stellt das Wurzelzertifikat als Vertrauensanker, sondern der Gerätebesitzer durch sein DOTACert.

Der Gerätebesitzer trägt also zur Stärke des Verfahrens mit der Strenge der Befolgung der Schritte innerhalb seiner Organisation bei. Für die Wirksamkeit des Verfahrens kann ferner vorgesehen sein, die Kontrolle vor dem Einfügen von Gerätezertifikaten in die Gerätedatenbank von dem Schritt der Ausstellung von Gerätezertifikaten mittels DOAKey zu trennen. Insbesondere dient ein DOAKey nicht als Berechtigungskriterium, um Zertifikate in die Gerätedatenbank hinzuzufügen.

In einer weiteren Variante der Erfindung ist eine Kombination eines speziellen Gültigkeitsmodells mit einem Nachweis, dass ein Zertifikat vor einem bestimmten Zeitpunkt erzeugt wurde, vorgesehen. Dieser Nachweis wird als Zeitstempel bezeichnet, wobei ein mögliches Format für elektronische Zeitstempel beispielsweise in "RFC 3161 Internet X.509 Public Key Infrastructure Time-Stamp Protocol (TSP)", Internet Engineering Task Force (IETF), 2001, beschrieben wird. In diesem beispielhaften Format wird ein Hash-Wert eines existierenden Dokumentes zusammen mit einem Datum und einer Zeitangabe von einer vertrauenswürdigen Stelle elektronisch signiert.

Der Unterschied dieser Erfindungsvariante zum oben beschriebenen Existenznachweis besteht in zwei Punkten:
1. Der Zeitstempel wird zum Zeitpunkt der Erzeugung des Gerätezertifikates oder kurz danach erzeugt, während der Existenznachweis zum Zeitpunkt der Prüfung des Gerätezertifikates erzeugt wird. Ein Existenznachweis ist nicht erforderlich. Eine Sperrauskunft ist hinreichend.
2. Die Prüfung der Gültigkeit des Zertifikates des Ausstellers (Sub-CA-Zertifikat) des Gerätezertifikates erfolgt nicht für den Zeitpunkt der Prüfung des Gerätezertifikates, sondern für den Zeitpunkt der Ausstellung des Gerätezertifikates.

Als Folge aus diesen Unterschieden können durch die Anwendung des Verfahrens nur solche Gerätezertifikate als gefälscht erkannt werden, die nach Sperrung des Sub-CA-Zertifikates unter Verwendung des korrekten Schlüssels erstellt wurden. Eine Sperrung erfolgt zum Beispiel nach der Entdeckung der Kompromittierung eines solchen Schlüssels. Das Verfahren erlaubt also die Begrenzung des wirtschaftlichen Schadens aber nicht ganz seine Verhinderung. Dafür ist seine Anwendung gegebenenfalls kostengünstiger als die Verwendung eines Existenznachweises.

Diese Variante der Erfindung wird im Folgenden näher beschrieben. Bei der folgenden Beschreibung des Verfahrens entsprechen die Bezeichnungen Produktionsstätte, Hersteller und Kunde Platzhaltern. Ein Hersteller ist der Inhaber an Schutzrechten zu Geräten, welche in seinem Auftrag hergestellt werden. Der Hersteller beherrscht entweder die Produktionsstätte und produziert damit selbst oder die Produktionsstätte gehört einem Auftragnehmer, welcher im Auftrage des Herstellers Geräte produziert. Ein Kunde ist eine Person, die in den Besitz eines Gerätes gelangt. Es ist dabei unerheblich, ob das Gerät direkt vom Hersteller erworben wurde.

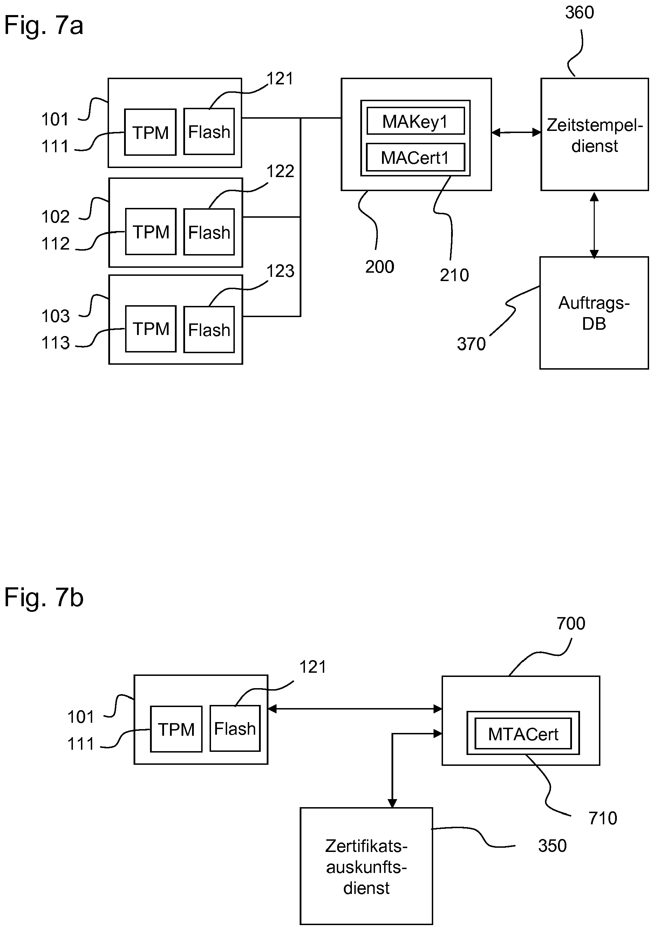

Ein für diese Variante einsetzbares System zum Erstellen von Gerätezertifikaten ist beispielhaft in Fig. 7a dargestellt, und ein entsprechendes System zur Gültigkeitsprüfung zum Einsatz beim Gerätebesitzer ist beispielhaft in Fig. 7b dargestellt.

Ein entsprechendes Verfahren zum Erstellen von Gerätezertifikaten in Verbindung mit einem entsprechenden Verfahren zur Prüfung der Gültigkeit eines so erstellten Gerätezertifikates, umfasst beispielhaft die folgenden Schritte:
1. Der Hersteller weist die Produktionsstätte an, eine bestimmte Anzahl Geräte 101, 102 und 103 zu produzieren. Optional hinterlegt er den Produktionsauftrag in seiner Auftragsdatenbank 370, zum Beispiel unter Verwendung eines Enterprise-Resource-Planning-Systems (ERP-System).
2. Am Produktionsarbeitsplatz wird eine Charge von Geräten 101, 102 und 103 gefertigt.
3. Dabei wird je Gerät ein individuelles Gerätezertifikat erzeugt, wozu am Produktionsarbeitsplatz 200 ein MAKey, im dargestellten Beispiel MAKey1, zur Verfügung steht.
4. Für jedes erstellte Gerätezertifikat oder für alle Gerätezertifikate einer Charge zusammen werden Zeitstempel bei einem Zeitstempeldienst 360 angefordert. Der Zeitstempeldienst 360 kann hierzu vom Hersteller selbst betrieben werden oder aber von einer anderen vertrauenswürdigen Stelle.
5. Optional prüft der Zeitstempeldienst 360, ob ein hinreichender Produktionsauftrag in der Auftragsdatenbank 370 des Herstellers vorliegt.
6. Der Zeitstempeldienst 360 erstellt einen Zeitstempel. Jedem Gerät 101, 102 und 103 wird eine Kopie des zu seinem Gerätezertifikat zugeordneten Zeitstempels beigefügt. Zum Beispiel wird der Zeitstempel im Gerät in der Nähe des Gerätezertifikates in einem Speicher 121, 122 bzw. 123 gespeichert.
7. Das Gerät 101, 102 bzw. 103 wird zum Vertrieb freigegeben, zum Beispiel indem es in das Warenlager überführt wird.
8. Eine Person erwirbt ein Gerät 101 und wird damit zum Geräteinhaber.
9. Der Gerätebesitzer prüft die Zertifikatskette des Gerätes 101 und die Bindung des EK-Zertifikates an das Gerät 101 mit einem vom Hersteller dokumentierten Verfahren unter Verwendung des Zertifikates MTACert als Vertrauensanker. Dieser Schritt ist oben im Detail beschrieben. Die Prüfung der Zertifikatskette erfolgt durch ein spezielles Gültigkeitsmodell unter Verwendung von Informationen aus dem zum Gerätezertifikat gehörenden Zeitstempel, wie es weiter unten näher beschrieben wird.

Der Gerätebesitzer verwendet hierfür zum Beispiel ein Software-Werkzeug, welches das MTACert kennt oder welches er ihm bekannt macht. Das Software-Werkzeug kann zum Beispiel der Gerätehersteller zur Verfügung stellen.

Das bei dem oben beschriebenen Schritt 9 genannte spezielle Gültigkeitsmodell für die Prüfung einer Zertifikatskette ist in Fig. 9 dargestellt und wird nachfolgend beschrieben. In Fig. 9 sind Gültigkeitszeiträume 910, 920 und 930 für eine Zertifikatskette aus nur drei Zertifikaten dargestellt, es können aber prinzipiell eine beliebige Anzahl Zwischenzertifikate (Sub-CA-Zertifikate) vorgesehen sein.

Das spezielle Gültigkeitsmodell sieht folgende Schritte vor:
9.1. Zunächst wird der zum Gerätezertifikat gehörende Zeitstempel nach den Regeln seines Ausstellers auf Gültigkeit überprüft und seine Bindung an das Gerätezertifikat verifiziert.
9.2. Der Zeitpunkt t₀ der Prüfung des Gerätezertifikates muss innerhalb des Gültigkeitszeitraumes 930 des Gerätezertifikates liegen.
9.3. Der Zeitpunkt t₁ der Ausstellung des Zeitstempels wie er im Zeitstempel angegeben ist, muss innerhalb des Gültigkeitszeitraumes aller Zertifikate der Zertifikatskette und vor t₀ liegen.
9.4. Zu jedem Zwischenzertifikat der Zertifikatskette muss eine Sperrinformation vorliegen, die für den Zeitpunkt t₁ gültig ist, d.h. t1 muss innerhalb des Gültigkeitszeitraums 915 der Sperrinformation liegen. Die Sperrinformation braucht keine Existenzinformation zu dem jeweiligen Zertifikat auszuweisen, aber sie muss bestätigen, dass das zugehörige Zertifikat zum Zeitpunkt t₁ nicht gesperrt war. Es ist also akzeptabel, wenn das Zertifikat zu einem Zeitpunkt nach t₁ gesperrt wurde. Der zuständige Zertifizierungsdienst muss hierfür eine Sperrpolitik verfolgen, bei der Sperrungen nur mit einer Gültigkeit ab dem aktuellen Zeitpunkt erfolgen aber nie wieder aufgehoben werden können.

Das oben beschriebene Gültigkeitsmodell bedeutet effektiv, dass ein Gerätezertifikat so lange als gültig verifiziert wird, bis sein Gültigkeitszeitraum 930 oder der Gültigkeitszeitraum des zugehörigen Zeitstempels abgelaufen ist, was immer zuerst eintritt. Diese beiden Gültigkeitszeiträume sollten vom Gerätehersteller vorzugsweise auf die erwartete Nutzungsdauer des Gerätes und die erwartete Dauer der Widerstandsfähigkeit der bei den Zertifikaten und beim Zeitstempel verwendeten Algorithmen abgestimmt werden.

Für eine ausreichende Sicherheit des zuletzt oben beschriebenen Verfahrens ist die Erfüllung der folgenden Bedingungen vorgesehen:
a) Sobald eine unberechtigte Verwendung von Schlüsseln zur Erzeugung von Gerätezertifikaten entdeckt oder vermutet wird, werden die zugehörigen Sub-CA-Zertifikate mit Wirksamkeit ab diesem Zeitpunkt unwiderruflich gesperrt. Dieses muss durch den Betreiber des zugehörigen Zertifizierungsdienstes und den berechtigten Nutzer der Schlüssel garantiert werden.
b) Der Zeitstempeldienst erstellt immer nur Zeitstempel für die aktuell gültige Zeit. Dieses wird durch jeden seriösen Zeitstempeldienst garantiert.
c) Der Zeitstempeldienst darf keinen Schlüssel zur Ausstellung von Zeitstempeln verwenden, der auch zum Ausstellen von Gerätezertifikaten verwendet wird.
d) Der Sperrauskunftsdienst darf keinen Schlüssel zur Ausstellung von Auskünften verwenden, der auch zum Ausstellen von Gerätezertifikaten verwendet wird.

Unter der Annahme, dass kein Unberechtigter gültige Zeitstempel ausstellen kann, kann ein Unberechtigter maximal bis zum Endecken der unberechtigten Ausstellung von Gerätezertifikaten solche erfolgreich fälschen. Der wirtschaftliche Schaden lässt sich somit begrenzen, sobald er erkannt ist.

Die Verfahren zum Erstellen und Prüfen für Echtheitszertifikate wie zuletzt oben beschrieben, können analog für Besitzzertifikate verwendet werden, wobei die folgenden Modifikationen vorgesehen sind:
- Der Gerätebesitzer produziert die Geräte nicht, sondern personalisiert sie lediglich durch Kennzeichnung mit Besitzzertifikaten.
- Nicht die Produktionsstätte erstellt die Gerätezertifikate, sondern der Gerätebesitzer mit Hilfe eines DOAKey wie in Abschnitt 3.2 oben beschrieben.
- Nicht die Produktionsstätte fordert die Zeitstempel an, sondern der Gerätebesitzer.
- Der Zeitstempeldienst wird nicht vom Gerätehersteller ausgewählt, sondern vom Gerätebesitzer.
- Nicht der Gerätehersteller, sondern der Gerätebesitzer betreibt einen Sperrauskunftsdienst für Zwischenzertifikate (Sub-CA-Zertifikate) der Zertifikatsketten der Gerätezertifikate.
- Nicht der Gerätehersteller stellt das Wurzelzertifikat als Vertrauensanker, sondern der Gerätebesitzer durch sein DOTACert.

Aus der Beschreibung des obigen Gültigkeitsmodells ist ersichtlich, dass alle einzuholenden Sperrinformationen nur für den Zeitpunkt t₁ der Erstellung des Zeitstempels gültig sein müssen. Das gilt auch für spätere Zeitpunkte, zu denen die Prüfung des Gerätezertifikates wiederholt wird. Es ist also möglich, einmalig alle Zustandsinformationen einzuholen und sie später wiederzuverwenden. Ein Gerätehersteller kann diese Zustandsinformationen den von ihm ausgestellten Echtheitszertifikaten beifügen. Ein Gerätebesitzer kann das analog für von ihm ausgestellte Besitzzertifikate tun. Diese Erweiterung ermöglicht eine spätere Prüfung von Gerätezertifikaten ohne Zugang zu einem Kommunikationsnetz, d.h. off-line. Diese Erweiterung wird unten noch detaillierter aber ganz analog für die nachfolgend beschriebene weitere Erfindungsvariante beschrieben.

In der nachfolgend beschriebenen weiteren Erfindungsvariante ist vorgesehen, das Gerätezertifikat mit einem Zeitstempel zur Bestätigung des Zeitpunktes seiner Ausstellung zu kombinieren, sowie desweiteren das Gerätezertifikat mittels eines Gültigkeitsmodells zu prüfen, welches Existenznachweise für die Zertifikate außer dem Wurzelzertifikat vorsieht.

Dies entspricht im Wesentlichen einer Kombination oben bereits beschriebener Erfindungsvarianten, wobei insbesondere vorteilhaft ermöglicht wird, dass durch bestimmte Vorkehrungen bei der Erzeugung von Gerätezertifikaten ihre Prüfung später ohne weitere Einholung von Zusatzinformation erfolgen kann.

Jede benötigte Zusatzinformation kann mit dem Gerät ausgeliefert beziehungsweise in oder bei ihm aufbewahrt werden. Insbesondere kann damit die Prüfung unabhängig von Zugängen zu Kommunikationsnetzen wie dem Internet, also off-line, erfolgen.

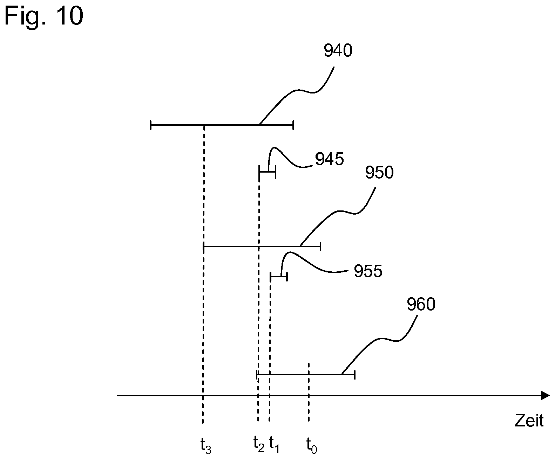

Unabhängig davon, ob Gerätezertifikate als Echtheitszertifikate oder als Besitzzertifikate erstellt werden, sieht ein Verfahren zum Erstellen von Gerätezertifikaten und zum Prüfen von deren Gültigkeit unter Bezugnahme auf Fig. 10 vor, dass für jedes Gerätezertifikat Folgendes geschieht beziehungsweise gilt:
1. Nach der Erstellung eines Gerätezertifikates und vor seiner ersten Prüfung wird ein Zeitstempel zu dem Gerätezertifikat erzeugt. Gegebenenfalls wird der Zeitstempel zu einer Menge von Gerätezertifikaten erzeugt, zum Beispiel einer Charge von Geräten.
2. Bei jedem Prüfen der Gültigkeit von Gerätezertifikaten werden folgende Bedingungen geprüft:
   2.1. Die Bindung des Gerätezertifikates an einen geheimen Schlüssel muss nachgewiesen werden.
   2.2. Eine Zertifikatskette muss vom Gerätezertifikat zu einem Vertrauenswürdigen Wurzelzertifikat konstruiert werden können.
   2.3. Der Zeitpunkt t₀ der Prüfung muss innerhalb des Gültigkeitszeitraumes 960 des Gerätezertifikates liegen.
   2.4. Der Zeitstempel zum Gerätezertifikat muss nach den Regeln des Erstellers auf Gültigkeit geprüft werden. Dies schließt insbesondere eine Prüfung der Bindung des Zeitstempels an das Gerätezertifikat ein.
   2.5. Der Zeitpunkt t₁ der Erstellung des Zeitstempels, wie er in dem Zeitstempel angegeben ist, muss innerhalb des Gültigkeitszeitraumes 960 des Gerätezertifikates und vor dem Zeitpunkt t₀ liegen.
   2.6. Eine Zustandsinformation für das Gerätezertifikat muss existieren, für den Zeitpunkt t₁ gültig sein, d.h. t₁ muss innerhalb des Gültigkeitszeitraumes 955 liegen, und für diesen Zeitpunkt bestätigen,
      2.6.1. dass das Gerätezertifikat von berechtigter Stelle ausgestellt wurde, d.h. einen Existenznachweis liefern, zum Beispiel weil es in der Datenbank des Ausstellers verzeichnet ist, und
      2.6.2. dass das Gerätezertifikat zum Zeitpunkt t₁ nicht gesperrt war.
   2.7. Für jedes Zwischenzertifikat der Zertifikatskette (jedes Sub-CA-Zertifikat) muss gelten,
      2.7.1. dass der Ausstellungszeitpunkt t_{N} des in der Kette direkt von ihm abhängigen Zertifikates, zum Beispiel dessen Beginn des Gültigkeitszeitraumes, innerhalb des Gültigkeitszeitraumes 950 des Zwischenzertifikates liegt, wobei dies im dargestellten Beispiel der Ausstellungszeitpunkt t₂ des Gerätezertifikates ist,
      2.7.2. dass zu dem Zwischenzertifikat eine für den Zeitpunkt t_{N} gültige Zustandsinformation existiert, welche die Existenz des Zwischenzertifikates bestätigt (Existenznachweis) und, dass es zum Zeitpunkt t_{N} gültig war, dass also im dargestellten Beispiel t₂ innerhalb des Gültigkeitszeitraumes 945 der Zustandsinformation zu dem Zwischenzertifikat liegt.
   2.8. Der Zeitpunkt t₃ der Ausstellung des vom Wurzelzertifikat direkt abhängigen Zwischenzertifikates muss innerhalb des Gültigkeitszeitraumes 940 des Wurzelzertifikates liegen.

Das mit Punkt 2 oben beschriebene Gültigkeitsmodell ist in Fig. 10 veranschaulicht. Die dort dargestellten Gültigkeitszeiträume basieren auf einer Zertifikatskette bestehend aus 3 Zertifikaten. Das beschriebene Verfahren ist jedoch ebenso für Zertifikatsketten mit mehreren Zwischenzertifikaten (Sub-CA-Zertifikaten) anwendbar.

Die Sicherheit des Verfahrens besteht darin, dass von unberechtigter Stelle ausgestellte Gerätezertifikate erkannt werden an dem Fehlen eines Zeitstempels, an dem Fehlen eines Existenznachweises und/oder an einem Zeitstempel mit Ausstellungszeitpunkt nach der Sperrung des Zertifikates des ausstellenden Schlüssels.

Dafür ist vorteilhaft vorgesehen, dass die folgenden Bedingungen erfüllt werden:
a) Sobald eine unberechtigte Verwendung von Schlüsseln zur Erzeugung von Gerätezertifikaten entdeckt oder vermutet wird, werden die zugehörigen Sub-CA-Zertifikate mit Wirksamkeit ab diesem Zeitpunkt unwiderruflich gesperrt. Dieses muss durch den Betreiber des zugehörigen Zertifizierungsdienstes und den berechtigten Nutzer der Schlüssel garantiert werden.
b) Der Zeitstempeldienst erstellt immer nur Zeitstempel für die aktuell gültige Zeit. Dieses wird durch jeden seriösen Zeitstempeldienst garantiert.
c) Der Zeitstempeldienst darf keinen Schlüssel zur Ausstellung von Zeitstempeln verwenden, der auch zum Ausstellen von Gerätezertifikaten verwendet wird.
d) Der Zustandsinformationsdienst, welcher für die Zertifikate der Kette Sperrauskünfte und Existenznachweise erstellt, darf dazu keinen Schlüssel verwenden, der auch zum Ausstellen von Gerätezertifikaten verwendet wird.

Aus der Beschreibung des obigen Gültigkeitsmodells ist ersichtlich, dass alle zum Gerätezertifikat zusätzlich benötigten Informationen zum Zeitpunkt t₁ der Erstellung des Zeitstempels eingeholt werden können. Dieses betrifft auch Auskünfte und Nachweise, die zur Prüfung des Zeitstempels selbst notwendig sind. Diese Informationen können dem Gerätezertifikat beigefügt werden. Sie brauchen dann nicht mehr während nachfolgender Prüfungen erneut eingeholt zu werden. Stattdessen kann die Prüfung mit Hilfe dieser Information jederzeit erneut nachvollzogen werden.

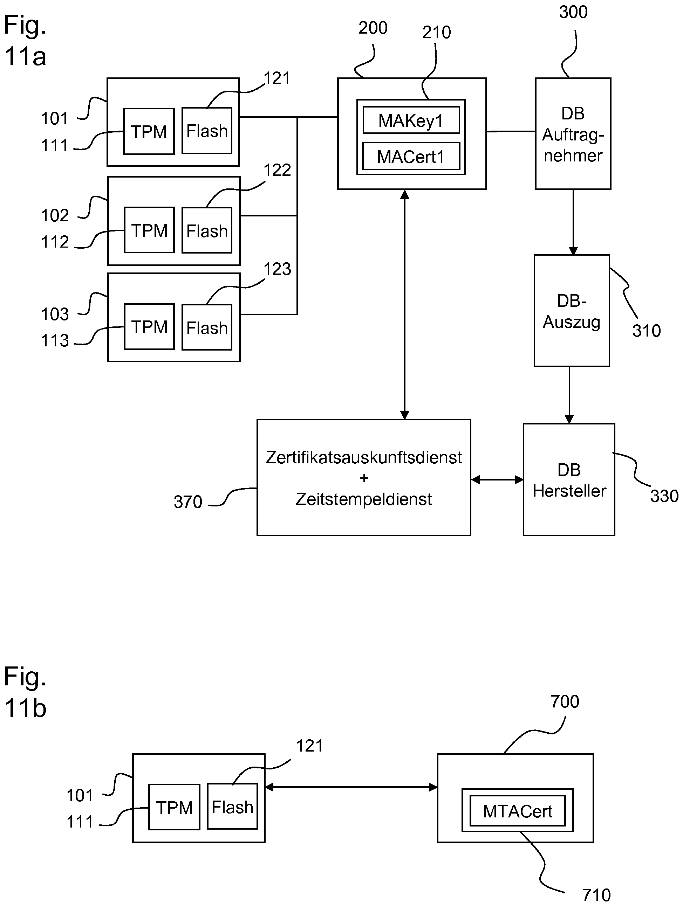

Das Verfahren zur Zusammenstellung der Information wird nachfolgend beispielhaft unter Bezugnahme auf die Figuren 11a und 11b beschrieben, um zu verdeutlichen, welche Information von woher stammen kann. Bei der folgenden Beschreibung des Verfahrens entsprechen die Bezeichnungen Produktionsstätte, Hersteller und Kunde Platzhaltern. Ein Hersteller ist der Inhaber an Schutzrechten zu Geräten, welche in seinem Auftrag hergestellt werden. Der Hersteller beherrscht entweder die Produktionsstätte und produziert damit selbst oder die Produktionsstätte gehört einem Auftragnehmer, welcher im Auftrage des Herstellers Geräte produziert. Ein Kunde ist eine Person, die in den Besitz eines Gerätes gelangt. Es ist dabei unerheblich, ob das Gerät direkt vom Hersteller erworben wurde.

Ein Verfahren zum Erstellen von Gerätezertifikaten in Verbindung mit einem entsprechenden Verfahren zur Prüfung der Gültigkeit eines so erstellten Gerätezertifikates umfasst in dieser Ausführungsvariante der Erfindung beispielhaft die folgenden Schritte:
1. Der Hersteller weist die Produktionsstätte an, eine bestimmte Anzahl Geräte 101, 102 und 103 zu produzieren. Optional hinterlegt er den Produktionsauftrag in einer, in Fig. 11a nicht dargestellten Auftragsdatenbank, zum Beispiel seinem Enterprise-Resource-Planning-System (ERP-System) .
2. Am Produktionsarbeitsplatz wird eine Charge von Geräten gefertigt.
3. Dabei wird je Gerät 101, 102 bzw. 103 ein individuelles Gerätezertifikat erzeugt, wozu am Produktionsarbeitsplatz 200 ein MAKeyl zur Verfügung steht. Die Produktionsstätte sendet die Gerätezertifikate einer Charge an den Hersteller, beispielsweise unter Verwendung einer partiellen Datenbank 300 des Auftragnehmers und eines daraus erstellten Datenbankauszugs 310.
4. Beim Hersteller wird die Liste geprüft, zum Beispiel durch einen Vergleich mit der Auftragsdatenbank. Im Falle der positiven Prüfung werden die Gerätezertifikate in der Datenbank 330 des Herstellers hinterlegt.
5. Für jedes erstellte Gerätezertifikat oder für alle Gerätezertifikate einer Charge zusammen werden Zeitstempel bei einem Zeitstempeldienst 370 angefordert. Der Zeitstempeldienst kann hierzu vom Hersteller selbst betrieben werden oder aber von einer anderen vertrauenswürdigen Stelle. Zusätzlich wird zu jedem Gerätezertifikat oder für alle Zertifikate der Charge eine Zustandsauskunft mit Existenznachweis und Sperrinformation eingeholt. Diese stammt vom Hersteller. Der Zustandsauskunftsdienst 370 überprüft vor Auskunftserteilung die Existenz der Geräte anhand der Gerätedatenbank 330 oder eines Auszugs davon. Der Zeitstempel und die Zustandsauskunft werden den Geräten 101, 102 bzw. 103 beigelegt oder sogar in ihnen gespeichert, beispielsweise in einem Speicher 121, 122 bzw. 123.
6. Das Gerät wird zum Vertrieb freigegeben, zum Beispiel indem es in das Warenlager überführt wird.
7. Eine Person erwirbt ein Gerät 101 und wird damit zum Geräteinhaber.
8. Der Gerätebesitzer prüft die Zertifikatskette des Gerätes und die Bindung des EK-Zertifikates an das Gerät 101 mit einem vom Hersteller dokumentierten Verfahren unter Verwendung des Zertifikates MTACert als Vertrauensanker. Die Prüfung der Zertifikatskette erfolgt durch ein spezielles Gültigkeitsmodell wie oben beschrieben. Dabei werden die bereits vorhandenen Zustandsauskünfte und Zeitstempel verwendet. Der Gerätebesitzer verwendet hierfür zum Beispiel ein Software-Werkzeug, welches das MTACert kennt oder welches er ihm bekannt macht. Das Software-Werkzeug kann zum Beispiel der Gerätehersteller zur Verfügung stellen. Wie in Fig. 11b dargestellt, ist für die Prüfung somit vom Prüfcomputer 700 lediglich ein Zugriff auf das Gerät 101, nicht aber auf andere Informationsquellen erforderlich.

Das Zusammenstellen von Nachweisen für Besitzzertifikate erfolgt analog, wobei die folgenden Modifikationen vorgesehen sind:
- Der Gerätebesitzer produziert die Geräte nicht, sondern personalisiert sie lediglich durch Kennzeichnung mit Besitzzertifikaten.
- Nicht die Produktionsstätte erstellt die Gerätezertifikate, sondern der Gerätebesitzer mit Hilfe eines DOAKey wie oben beschrieben.
- Nicht die Produktionsstätte fordert die Zeitstempel und Zustandsauskünfte an, sondern der Gerätebesitzer.
- Der Zeitstempeldienst wird nicht vom Gerätehersteller ausgewählt, sondern vom Gerätebesitzer.
- Nicht der Gerätehersteller, sondern der Gerätebesitzer betreibt einen Sperrauskunftsdienst für Zwischenzertifikate (Sub-CA-Zertifikate) der Zertifikatsketten der Gerätezertifikate.
- Nicht der Gerätehersteller stellt das Wurzelzertifikat als Vertrauensanker, sondern der Gerätebesitzer durch sein DOTACert.

## Patentansprüche

1. Verfahren zum Erstellen von Gerätezertifikaten (630) für elektronische Geräte (101-103), umfassend die Schritte:
- Bereitstellen eines elektronischen Gerätes (101-103) mit einem darin gespeicherten, von außerhalb des Gerätes nicht auslesbaren Geheimnis,
- Erzeugen eines Gerätezertifikates (630), dessen Zertifikatsinformation (530) kryptographisch an das Geheimnis gebunden ist, wobei das Gerätezertifikat (630) eine mit einem Signierschlüssel (525) erzeugte digitale Signatur (430) umfasst und mittels einer Zertifikatskette (610, 620, 630) authentisierbar ist, wobei die Zertifikatskette eine mit dem Gerätezertifikat (630) beginnende Folge von wenigstens zwei Zertifikaten ist, wobei jedes Zertifikat (610, 620, 630) der Zertifikatskette eine Information umfasst, welche den Gültigkeitszeitraum des jeweiligen Zertifikates definiert, und wobei jedes Zertifikat (610, 620) der Zertifikatskette mit Ausnahme des Gerätezertifikates (630) eine Zertifikatsinformation (510, 520) umfasst, mit welcher das jeweils in der Folge vorhergehende Zertifikat authentisierbar ist, und
- Erstellen einer Bestätigungsinformation, welche bestätigt, dass das Gerätezertifikat (630) von einer autorisierten Instanz erzeugt wurde, wobei die Bestätigungsinformation darin besteht, dass das Gerätezertifikat oder eine aus dem Gerätezertifikat abgeleitete Information abrufbar in einer vorbestimmten Datenbank gespeichert wird, und Bereitstellen, unter Ansprechen auf die Bestätigungsinformation, einer digital signierten Zustandsinformation für das Gerätezertifikat (630), welche einen Nachweis umfasst, dass das Gerätezertifikat (630) von einer autorisierten Instanz erzeugt wurde,
und/oder
- Erzeugen eines digital signierten Zeitstempels, welcher das Gerätezertifikat mit dem Zeitpunkt verknüpft, zu dem der Zeitstempel erzeugt wird, wobei der digital signierte Zeitstempel von einem Server (360, 370), welcher einen Zeitstempeldienst bereitstellt, in Antwort auf eine Anfrage zur Erstellung eines Zeitstempels erzeugt wird, die erzeugten Zeitstempel gezählt werden, und der Server (360, 370) den Zeitstempel nur erzeugt, solange eine vorgegebene Obergrenze für die Anzahl der erzeugten Zeitstempel nicht überschritten wird.

2. Verfahren nach Anspruch 1, ferner umfassend den Schritt:
- Bereitstellen einer digital signierten Zustandsinformation für wenigstens ein weiteres Zertifikat der Zertifikatskette, welches den Nachweis umfasst, dass das weitere Zertifikat von einer autorisierten Instanz erzeugt wurde.

3. Verfahren nach einem der vorstehenden Ansprüche, wobei das erzeugte Gerätezertifikate (630) und/oder wenigstens ein weiteres Zertifikat der Zertifikatskette und/oder der digital signierte Zeitstempel und/oder wenigstens eine digital signierte Zustandsinformation in einer dem Gerät zuordenbaren Weise abrufbar bereitgestellt wird, insbesondere durch Speichern in einem auslesbaren Speicher (121-123) oder Speichermedium, welches dem elektronischen Gerät (101-103) zugeordnet oder im elektronischen Gerät (101-103) angeordnet ist, oder durch Bereitstellen mittels eines Verzeichnisdienstes.

4. Verfahren nach einem der vorstehenden Ansprüche, wobei für die Erzeugung der digitalen Signatur (430) des Gerätezertifikates (630) und der digitalen Signatur des Zeitstempels unterschiedliche Signierschlüssel verwendet werden.

5. Verfahren nach einem der vorstehenden Ansprüche, wobei für die Erzeugung der digitalen Signatur des Gerätezertifikates und der digitalen Signatur der Zustandsinformationen unterschiedliche Signierschlüssel verwendet werden.

6. Verfahren nach einem der vorstehenden Ansprüche, ferner umfassend die Schritte:
- Erkennen einer unberechtigten Verwendung eines zum Signieren eines ersten Zertifikates (630) der Zertifikatskette verwendeten Signierschlüssels (525), und
- Erzeugen einer digital signierten Zustandsinformation für das in der Zertifikatskette auf das erste Zertifikat (630) folgende Zertifikat (620), wobei die Zustandsinformation eine Sperrinformation umfasst, welche das in der Zertifikatskette auf das erste Zertifikat (630) folgende Zertifikat (620) für Prüfzeitpunkte ab dem Zeitpunkt, zu dem die unberechtigte Verwendung erkannt wurde, als ungültig identifiziert.

7. Verfahren nach einem der vorstehenden Ansprüche, wobei das Geheimnis der private Teil eines asymmetrischen Schlüsselpaares ist.

8. Verfahren nach einem der vorstehenden Ansprüche, wobei das Geheimnis in einem Chip (111-113) des Gerätes (101-103) gespeichert ist.

9. Verfahren zur Prüfung der Gültigkeit eines Gerätezertifikates (630), umfassend die Schritte:
- Bereitstellen eines Gerätezertifikates (630),
- Bereitstellen eines vertrauenswürdigen Zertifikates (610), wobei das Gerätezertifikat (630) mit dem vertrauenswürdigen Zertifikat (610) über eine Zertifikatskette (630, 620, 610) verkettbar ist, wobei die Zertifikatskette eine mit dem Gerätezertifikat (630) beginnende und mit dem vertrauenswürdigen Zertifikat (610) endende Folge von wenigstens zwei Zertifikaten ist, wobei jedes Zertifikat der Zertifikatskette eine Information umfasst, welche den Gültigkeitszeitraum des jeweiligen Zertifikates definiert, und wobei jedes Zertifikat (610, 620) der Zertifikatskette mit Ausnahme des Gerätezertifikates (630) eine Zertifikatsinformation (520, 510) umfasst, mit welcher das jeweils in der Folge vorhergehende Zertifikat (620, 630) authentisierbar ist,
- Festlegen eines zugeordneten Prüfzeitpunktes für jedes Zertifikat (630, 620, 610) der Zertifikatskette,
- Bereitstellen einer dem Gerätezertifikat (630) zugeordneten, digital signierten Zustandsinformation, wobei die Zustandsinformation das Gerätezertifikat als gültig oder ungültig identifiziert und eine Information umfasst, welche den Gültigkeitszeitraum der Zustandsinformation definiert, und wobei die digital signierte Zustandsinformation unter Ansprechen auf eine Bestätigungsinformation bereitgestellt wird, welche bestätigt, dass das Gerätezertifikat (630) von einer autorisierten Instanz erzeugt wurde, wobei die Bestätigungsinformation darin besteht, dass das Gerätezertifikat oder eine aus dem Gerätezertifikat abgeleitete Information abrufbar in einer vorbestimmten Datenbank gespeichert wird,
- Festlegen eines zugeordneten Prüfzeitpunktes für die dem Gerätezertifikat (630) zugeordnete Zustandsinformation,
- Prüfen,
- ob das Gerätezertifikat (630) mittels der Zertifikatskette (630, 620, 610) erfolgreich authentisierbar ist,
- ob für jedes Zertifikat (630, 620, 610) der Zertifikatskette der zugeordnete Prüfzeitpunkt innerhalb des Gültigkeitszeitraumes des jeweiligen Zertifikates liegt,
- mittels eines in einem von außerhalb des Gerätes (101-103) nicht auslesbaren Speicher des Gerätes (101-103) hinterlegten Geheimnisses, ob eine Bindung des Gerätezertifikates (630) an das Gerät besteht (101-103),
- ob für die dem Gerätezertifikat (630) zugeordnete Zustandsinformation der zugeordnete Prüfzeitpunkt innerhalb des Gültigkeitszeitraumes der Zustandsinformation liegt,
- ob die dem Gerätezertifikat (630) zugeordnete Zustandsinformation das Gerätezertifikat als gültig identifiziert, wobei die Kennzeichnung des Gerätezertifikates als gültig den Nachweis umfasst, dass das Gerätezertifikat (630) von einer autorisierten Instanz erzeugt wurde, wobei der Nachweis daraus abgeleitet ist, dass das Zertifikat oder eine aus dem Zertifikat abgeleitete Information in der vorbestimmten Datenbank gespeichert ist,
wobei bei erfolgreicher Prüfung das Gerätezertifikat (630) als gültig, andernfalls als ungültig erkannt wird.

10. Verfahren nach Anspruch 9, ferner umfassend die Schritte:
- Bereitstellen einer zugeordneten, digital signierten Zustandsinformation für wenigstens ein weiteres Zertifikat (620, 610) der Zertifikatskette, wobei die Zustandsinformation das weitere Zertifikat (620, 610) als gültig oder ungültig identifiziert und eine Information umfasst, welche den Gültigkeitszeitraum der Zustandsinformation definiert, und wobei die digital signierte Zustandsinformation unter Ansprechen auf eine Bestätigungsinformation bereitgestellt wird, welche bestätigt, dass das weitere Zertifikat von einer autorisierten Instanz erzeugt wurde, wobei die Bestätigungsinformation darin besteht, dass das weitere Zertifikat oder eine aus dem weiteren Zertifikat abgeleitete Information abrufbar in einer vorbestimmten Datenbank gespeichert wird,
- Festlegen eines zugeordneten Prüfzeitpunktes für jede Zustandsinformation,
- Erkennen des Gerätezertifikates (630) als gültig, nur wenn
- für jede Zustandsinformation der zugeordnete Prüfzeitpunkt innerhalb des Gültigkeitszeitraumes der jeweiligen Zustandsinformation liegt, und
- jede Zustandsinformation das jeweils zugeordnete weitere Zertifikat als gültig identifiziert, wobei die Kennzeichnung des weiteren Zertifikates (620, 610) als gültig den Nachweis umfasst, dass das weitere Zertifikat (620, 610) von einer autorisierten Instanz erzeugt wurde, wobei der Nachweis daraus abgeleitet ist, dass das weitere Zertifikat oder eine aus dem weiteren Zertifikat abgeleitete Information in der vorbestimmten Datenbank gespeichert ist.

11. Verfahren zur Prüfung der Gültigkeit eines Gerätezertifikates (630), umfassend die Schritte:
- Bereitstellen eines Gerätezertifikates (630),
- Bereitstellen eines vertrauenswürdigen Zertifikates (610), wobei das Gerätezertifikat (630) mit dem vertrauenswürdigen Zertifikat (610) über eine Zertifikatskette (630, 620, 610) verkettbar ist, wobei die Zertifikatskette eine mit dem Gerätezertifikat (630) beginnende und mit dem vertrauenswürdigen Zertifikat (610) endende Folge von wenigstens zwei Zertifikaten ist, wobei jedes Zertifikat der Zertifikatskette eine Information umfasst, welche den Gültigkeitszeitraum des jeweiligen Zertifikates definiert, und wobei jedes Zertifikat (610, 620) der Zertifikatskette mit Ausnahme des Gerätezertifikates (630) eine Zertifikatsinformation (520, 510) umfasst, mit welcher das jeweils in der Folge vorhergehende Zertifikat (620, 630) authentisierbar ist,
- Bereitstellen eines dem Gerätezertifikat zugeordneten digital signierten Zeitstempels, welcher das Gerätezertifikat (630) mit einem Zeitpunkt verknüpft, zu dem der Zeitstempel erzeugt wird, wobei der digital signierte Zeitstempel von einem Server (360, 370), welcher einen Zeitstempeldienst bereitstellt, in Antwort auf eine Anfrage zur Erstellung eines Zeitstempels erzeugt wird, die erzeugten Zeitstempel gezählt werden, und der Server (360, 370) den Zeitstempel nur erzeugt, solange eine vorgegebene Obergrenze für die Anzahl der erzeugten Zeitstempel nicht überschritten wird;
- Festlegen eines zugeordneten Prüfzeitpunktes für jedes Zertifikat (630, 620, 610) der Zertifikatskette, wobei als zugeordneter Prüfzeitpunkt für wenigstens eines der Zertifikate (630, 620, 610) der Zertifikatskette der über den Zeitstempel mit dem Gerätezertifikat (630) verknüpfte Zeitpunkt festgelegt wird,
- Prüfen,
- ob das Gerätezertifikat (630) mittels der Zertifikatskette (630, 620, 610) erfolgreich authentisierbar ist,
- ob der Zeitstempel erfolgreich authentisierbar ist,
- ob für jedes Zertifikat (630, 620, 610) der Zertifikatskette der zugeordnete Prüfzeitpunkt innerhalb des Gültigkeitszeitraumes des jeweiligen Zertifikates liegt,
- mittels eines in einem von außerhalb des Gerätes (101-103) nicht auslesbaren Speicher des Gerätes (101-103) hinterlegten Geheimnisses, ob eine Bindung des Gerätezertifikates (630) an das Gerät besteht (101-103),
wobei bei erfolgreicher Prüfung das Gerätezertifikat (630) als gültig, andernfalls als ungültig erkannt wird.

12. Verfahren nach Anspruch 11, ferner umfassend die Schritte:
- Bereitstellen einer zugeordneten, digital signierten Zustandsinformation für wenigstens ein Zertifikat (630, 620, 610) der Zertifikatskette, wobei die Zustandsinformation das Zertifikat (630, 620, 610) als gültig oder ungültig identifiziert und eine Information umfasst, welche den Gültigkeitszeitraum der Zustandsinformation definiert, und wobei die digital signierte Zustandsinformation unter Ansprechen auf eine Bestätigungsinformation bereitgestellt wird, welche bestätigt, dass das Gerätezertifikat (630) von einer autorisierten Instanz erzeugt wurde, wobei die Bestätigungsinformation darin besteht, dass das Gerätezertifikat oder eine aus dem Gerätezertifikat abgeleitete Information abrufbar in einer vorbestimmten Datenbank gespeichert wird,
- Festlegen eines zugeordneten Prüfzeitpunktes für jede Zustandsinformation,
- Erkennen des Gerätezertifikates (630) als gültig, nur wenn
- für jede Zustandsinformation der zugeordnete Prüfzeitpunkt innerhalb des Gültigkeitszeitraumes der jeweiligen Zustandsinformation liegt, und
- jede Zustandsinformation das jeweils zugeordnete Zertifikat als gültig identifiziert, wobei die Kennzeichnung des Zertifikates (630, 620, 610) als gültig den Nachweis umfasst, dass das Zertifikat (630, 620, 610) von einer autorisierten Instanz erzeugt wurde, wobei der Nachweis daraus abgeleitet ist, dass das Zertifikat oder eine aus dem Zertifikat abgeleitete Information in der vorbestimmten Datenbank gespeichert ist.

13. Verfahren nach einem der Ansprüche 9 bis 12, wobei als zugeordneter Prüfzeitpunkt für wenigstens eines der Zertifikate (630, 620, 610) der Zertifikatskette und/oder wenigstens eine der Zustandinformationen der Zeitpunkt festgelegt wird, zu dem die Prüfung der Gültigkeit des Gerätezertifikates (630) durchgeführt wird.

14. Verfahren nach einem der Ansprüche 9 bis 13, wobei als zugeordneter Prüfzeitpunkt für wenigstens eine der Zustandinformationen der über den authentisierten Zeitstempel mit dem Gerätezertifikat verknüpfte Zeitpunkt festgelegt wird.

15. Verfahren nach einem der Ansprüche 9 bis 14, wobei als zugeordneter Prüfzeitpunkt für das Gerätezertifikat (630) der Zeitpunkt festgelegt wird, zu dem die Prüfung der Gültigkeit des Gerätezertifikates (630) durchgeführt wird, und wobei für alle weiteren Zertifikate (620, 610) der Zertifikatskette der über einen Zeitstempel mit dem Gerätezertifikat (630) verknüpfte Zeitpunkt festgelegt wird.

16. Verfahren nach einem der Ansprüche 9 bis 15, wobei als zugeordneter Prüfzeitpunkt für wenigstens eines der Zertifikate (630, 620, 610) der Zertifikatskette und/oder für die diesem Zertifikat zugeordnete Zustandsinformation der Zeitpunkt festgelegt wird, zu dem das in der Zertifikatskette vorhergehende Zertifikat erstellt wurde oder zu dem der Gültigkeitszeitraum des in der Zertifikatskette vorhergehenden Zertifikates beginnt.

17. Verfahren nach einem der Ansprüche 9 bis 16, wobei das Gerätezertifikat (630) die Funktion eines Echtheitszertifikates oder Besitzzertifikates aufweist und/oder das Gerätezertifikat (630) als Attributzertifikat ausgebildet ist.

18. Verfahren nach einem der Ansprüche 9 bis 17, wobei die Zertifikatskette wenigstens ein Zwischenzertifikat (620) umfasst, welches in der durch die Zertifikatskette definierten Reihenfolge zwischen dem Gerätezertifikat (630) und dem vertrauenswürdigen Zertifikat (610) angeordnet ist.

19. Verfahren nach einem der Ansprüche 9 bis 18, wobei das vertrauenswürdige Zertifikat (610) ein selbstsigniertes Wurzelzertifikat ist.

20. System zum Erstellen von Gerätezertifikaten (630) für elektronische Geräte (101-103), ausgebildet zum Ausführen eines Verfahrens gemäß einem der Ansprüche 1 bis 8, umfassend
- einen Produktionscomputer (200) mit einem darin gespeicherten Signierschlüssel zum Erzeugen von Gerätezertifikaten (630) für elektronische Geräte (101-103), dazu ausgebildet, auf einen Speicher (121-123) des jeweiligen elektronischen Gerätes (101-103) zuzugreifen, und
- eine mit dem Produktionscomputer (200) verbindbare Datenbank (300, 310), in welcher der Produktionscomputer (200) erzeugte Gerätezertifikate (630) oder daraus abgeleitete Werte speichert, wobei die Datenbank (300, 310) dazu ausgebildet ist, auf Anfrage eine Information bereitzustellen, ob ein angefragtes Gerätezertifikat (630) oder ein aus einem angefragten Gerätezertifikat (630) abgeleiteter Wert in der Datenbank (300, 310) gespeichert ist, und/oder
- ein mit dem Produktionscomputer (200) verbindbarer Server (360, 370), welcher einen Zeitstempeldienst bereitstellt, und welcher auf Anfrage des Produktionscomputers (200) für ein vom Produktionscomputer vorgegebenes Gerätezertifikat (630) einen digital signierten Zeitstempel erzeugt und dem Produktionscomputer (200) übermittelt, wobei der Zeitstempel das vorgegebene Gerätezertifikat (630) mit dem Zeitpunkt verknüpft, zu dem der Zeitstempel erzeugt wird.

21. System zur Prüfung der Gültigkeit eines Gerätezertifikates (630), ausgebildet zum Durchführen eines Verfahrens gemäß einem der Ansprüche 9 bis 19, umfassend
- ein Prüfgerät (700) zum Prüfen der Gültigkeit eines in einem Speicher eines elektronischen Gerätes hinterlegten Gerätezertifikates (630) mittels einer Zertifikatskette (630, 620, 610), und
- einen Zertifikatsauskunfts-Server (350, 370), auf welchen das Prüfgerät (700) zugreifen kann, um Zustandsinformationen für wenigstens ein Zertifikat (630, 620, 610) der Zertifikatskette abzufragen.

22. Elektronisches Gerät (101-103) mit einem von außerhalb des Gerätes nicht auslesbaren Speicher mit einem darin gespeicherten Geheimnis und mit einem auslesbaren Speicher (121-123), wobei in dem auslesbaren Speicher
- alle Zertifikate einer mit einem Gerätezertifikat (630) beginnenden und mit einem vertrauenswürdigen Zertifikat (610) endenden Folge von wenigstens zwei Zertifikaten, und
- eine dem Gerätezertifikat (630) zugeordnete, digital signierte Zustandsinformation
gespeichert sind, wobei
- die digital signierte Zustandsinformation unter Ansprechen auf eine Bestätigungsinformation bereitgestellt wird, welche bestätigt, dass das Gerätezertifikat (630) von einer autorisierten Instanz erzeugt wurde, wobei die Bestätigungsinformation darin besteht, dass das Gerätezertifikat oder eine aus dem Gerätezertifikat abgeleitete Information abrufbar in einer vorbestimmten Datenbank gespeichert ist,
- jedes Zertifikat der Zertifikatskette eine Information umfasst, welche den Gültigkeitszeitraum des jeweiligen Zertifikates definiert, und jedes Zertifikat (610, 620) der Zertifikatskette mit Ausnahme des Gerätezertifikates (630) eine Zertifikatsinformation (520, 510) umfasst, mit welcher das jeweils in der Folge vorhergehende Zertifikat (620, 630) authentisierbar ist, und die Zustandsinformation das Gerätezertifikat als gültig oder ungültig identifiziert und eine Information umfasst, welche den Gültigkeitszeitraum der Zustandsinformation definiert,
und wobei
- die Zustandsinformation dazu ausgebildet ist, dass, wenn die Zustandsinformation das Gerätezertifikat als gültig identifiziert, die Kennzeichnung des Gerätezertifikates als gültig den Nachweis umfasst, dass das Gerätezertifikat von einer autorisierten Instanz erzeugt wurde, wobei der Nachweis daraus abgeleitet ist, dass das Zertifikat oder eine aus dem Zertifikat abgeleitete Information in einer vorbestimmten Datenbank gespeichert ist,
und/oder
- in dem auslesbaren Speicher ferner ein dem Gerätezertifikat zugeordneter digital signierter Zeitstempel, welcher das Gerätezertifikat (630) mit einem Zeitpunkt verknüpft, gespeichert ist.

23. Speichermedium, welches einem elektronischen Gerät (101-103) zugeordnet ist, wobei das elektronische Gerät (101-103) einen von außerhalb des Gerätes nicht auslesbaren Speicher mit einem darin gespeicherten Geheimnis umfasst, und wobei in dem Speichermedium
- alle Zertifikate einer mit einem Gerätezertifikat (630) beginnenden und mit einem vertrauenswürdigen Zertifikat (610) endenden Folge von wenigstens zwei Zertifikaten, und
- eine dem Gerätezertifikat (630) zugeordnete, digital signierte Zustandsinformation
gespeichert sind, wobei
- die digital signierte Zustandsinformation unter Ansprechen auf eine Bestätigungsinformation bereitgestellt wird, welche bestätigt, dass das Gerätezertifikat (630) von einer autorisierten Instanz erzeugt wurde, wobei die Bestätigungsinformation darin besteht, dass das Gerätezertifikat oder eine aus dem Gerätezertifikat abgeleitete Information abrufbar in einer vorbestimmten Datenbank gespeichert ist,
- jedes Zertifikat der Zertifikatskette eine Information umfasst, welche den Gültigkeitszeitraum des jeweiligen Zertifikates definiert, und jedes Zertifikat (610, 620) der Zertifikatskette mit Ausnahme des Gerätezertifikates (630) eine Zertifikatsinformation (520, 510) umfasst, mit welcher das jeweils in der Folge vorhergehende Zertifikat (620, 630) authentisierbar ist, und die Zustandsinformation das Gerätezertifikat als gültig oder ungültig identifiziert und eine Information umfasst, welche den Gültigkeitszeitraum der Zustandsinformation definiert,
und wobei
- die Zustandsinformation dazu ausgebildet ist, dass, wenn die Zustandsinformation das Gerätezertifikat als gültig identifiziert, die Kennzeichnung des Gerätezertifikates als gültig den Nachweis umfasst, dass das Gerätezertifikat von einer autorisierten Instanz erzeugt wurde, wobei der Nachweis daraus abgeleitet ist, dass das Zertifikat oder eine aus dem Zertifikat abgeleitete Information in einer vorbestimmten Datenbank gespeichert ist,
und/oder
- in dem auslesbaren Speicher ferner ein dem Gerätezertifikat zugeordneter digital signierter Zeitstempel, welcher das Gerätezertifikat (630) mit einem Zeitpunkt verknüpft, gespeichert ist.

## Claims

1. A method for creating device certificates (630) for electronic devices (101-103), comprising the steps of:
- providing an electronic device (101-103) that has a secret stored therein which is not readable from outside the device,
- creating a device certificate (630) whose certificate information (530) is cryptographically bound to the secret, wherein said device certificate (630) comprises a digital signature (430) generated using a signing key (525) and is authenticatable by means of a certificate chain (610, 620, 630), the certificate chain being a sequence of at least two certificates starting with the device certificate (630), wherein each certificate (610, 620, 630) of the certificate chain comprises an information defining the validity period of the respective certificate, and wherein each certificate (610, 620) of the certificate chain with the exception of the device certificate (630) comprises a certificate information (510, 520) by means of which the respective previous certificate in the sequence is authenticatable, and
- creating a confirmation information which confirms that the device certificate (630) was created by an authorized entity, wherein the confirmation information comprises that the device certificate or an information derived from the device certificate is stored in retrievable manner in a predefined database, and providing, in response to the confirmation information, a digitally signed piece of status information for the device certificate (630), which comprises a proof that the device certificate (630) was created by an authorized entity, and/or
- generating a digitally signed timestamp which associates the device certificate with the time at which the timestamp is created, wherein the digitally signed timestamp is generated, in response to a request for generating a timestamp, by a server (360, 370) which provides a timestamp service, the generated timestamps are counted, and the server (360, 370) only generates the timestamp as long as a predefined upper limit of the number of generated timestamps is not exceeded.

2. The method as claimed in claim 1, further comprising the step of:
- providing a digitally signed piece of status information for at least one further certificate of the certificate chain, which comprises a proof that the further certificate was created by an authorized entity.

3. The method as claimed in any one of the preceding claims, wherein the created device certificate (630) and/or at least one further certificate of the certificate chain and/or the digitally signed timestamp and/or at least one digitally signed piece of status information is provided in accessible form in a manner so as to be attributable to the device, in particular by being stored in a readable memory (121-123) or a storage medium associated with the electronic device (101-103) or arranged in the electronic device (101-103), or by being provided via a directory service.

4. The method as claimed in any one of the preceding claims, wherein different signing keys are used for the generation of the digital signature (430) of the device certificate (630) and the digital signature of the timestamp.

5. The method as claimed in any one of the preceding claims, wherein different signing keys are used for the generation of the digital signature of the device certificate and the digital signature of the piece of status information.

6. The method as claimed in any one of the preceding claims, further comprising the steps of:
- detecting an unauthorized use of a signing key used for signing a first certificate (630) of the certificate chain (525), and
- generating a digitally signed piece of status information for the certificate (620) subsequent to the first certificate (630) in the certificate chain, wherein the piece of status information comprises a revocation information which identifies the certificate (620) subsequent to the first certificate (630) in the certificate chain as invalid for all checking times after the time at which the unauthorized use has been detected.

7. The method as claimed in any one of the preceding claims, wherein the secret is a private part of an asymmetric key pair.

8. The method as claimed in any one of the preceding claims, wherein the secret is stored in a chip (111-113) of the device (101-103).

9. A method for checking the validity of a device certificate (630), comprising the steps of:
- providing a device certificate (630),
- providing a trusted certificate (610), wherein the device certificate (630) is linkable with the trusted certificate (610) via a certificate chain (630, 620, 610), wherein the certificate chain is a sequence of at least two certificates starting with the device certificate (630) and terminating with the trusted certificate (610), wherein each certificate in the certificate chain comprises an information defining the validity period of the respective certificate, and wherein each certificate (610, 620) of the certificate chain with the exception of the device certificate (630) comprises a certificate information (520, 510) by means of which the respective previous certificate in the sequence (620, 630) is authenticatable,
- defining an associated checking time for each certificate (630, 620, 610) of the certificate chain,
- providing a digitally signed piece of status information that is associated with the device certificate (630), wherein the piece of status information identifies the device certificate as valid or invalid and comprises an information which defines the validity period of the piece of status information, and wherein the digitally signed piece of status information is provided in response to a confirmation information which confirms that the device certificate (630) was created by an authorized entity, wherein the confirmation information comprises that the device certificate or an information derived from the device certificate is stored in retrievable manner in a predefined database,
- defining an associated checking time for the piece of status information associated with the device certificate (630),
- checking
- whether the device certificate (630) is successfully authenticatable by means of the certificate chain (630, 620, 610),
- for each certificate (630, 620, 610) of the certificate chain, whether the associated checking time is within the validity period of the respective certificate,
- whether a binding of the device certificate (630) to the device (101-103) exists, by means of a secret stored in a memory of the device (101-103) which is not readable from outside the device (101-103),
- whether the associated checking time of the piece of status information associated with the device certificate (630) is within the validity period of the piece of status information,
- whether the piece of status information associated with the device certificate (630) identifies the device certificate as valid, wherein an identification of the device certificate as valid comprises a proof that the device certificate (630) was created by an authorized entity, wherein the proof is derived from the fact that the certificate or information derived from the certificate is stored in the predefined database,
wherein if the check is successful the device certificate (630) is identified as valid, otherwise as invalid.

10. The method as claimed in claim 9, further comprising the steps of:
- providing an associated digitally signed piece of status information for at least one further certificate (620, 610) of the certificate chain, wherein the piece of status information identifies the further certificate (620, 610) as valid or invalid and comprises an information which defines the validity period of the piece of status information, and wherein the digitally signed piece of status information is provided in response to a confirmation information which confirms that the device certificate (630) was created by an authorized entity, wherein the confirmation information comprises that the device certificate or an information derived from the device certificate is stored in retrievable manner in a predefined database,
- defining an associated checking time for each piece of status information,
- identifying the device certificate (630) as valid only if
- for each piece of status information the associated checking time is within the validity period of the respective piece of status information, and
- each piece of status information identifies the respectively associated further certificate as valid, wherein the identification of the further certificate (620, 610) as valid comprises a proof that the further certificate (620, 610) was created by an authorized entity, wherein the proof is derived from the fact that the further certificate or information derived from the further certificate is stored in the predefined database.

11. A method for checking the validity of a device certificate (630), comprising the steps of:
- providing a device certificate (630),
- providing a trusted certificate (610), wherein the device certificate (630) is linkable with the trusted certificate (610) via a certificate chain (630, 620, 610), wherein the certificate chain is a sequence of at least two certificates starting with the device certificate (630) and terminating with the trusted certificate (610), wherein each certificate in the certificate chain comprises an information defining the validity period of the respective certificate, and wherein each certificate (610, 620) of the certificate chain with exception of the device certificate (630) comprises a certificate information (520, 510) by means of which the respective previous certificate in the sequence (620, 630) is authenticatable,
- providing a digitally signed timestamp associated with the device certificate, which associates the device certificate (630) with a point in time at which the timestamp is created, wherein the digitally signed timestamp is generated, in response to a request for generating a timestamp, by a server (360, 370) which provides a timestamp service, the generated timestamps are counted, and the server (360, 370) only generates the timestamp as long as a predefined upper limit of the number of generated timestamps is not exceeded;
- defining an associated checking time for each certificate (630, 620, 610) of the certificate chain, wherein the point in time associated with the device certificate (630) via the timestamp is defined as the associated checking time for at least one of the certificates (630, 620, 610) of the certificate chain,
- checking
- whether the device certificate (630) is successfully authenticatable by means of the certificate chain (630, 620, 610),
- whether the timestamp is successfully authenticatable,
- for each certificate (630, 620, 610) of the certificate chain, whether the associated checking time is within the validity period of the respective certificate,
- whether a binding of the device certificate (630) to the device (101-103) exists, by means of a secret stored in a memory of the device (101-103) not readable from outside the device (101-103),
wherein if the check is successful the device certificate (630) is identified as valid, otherwise as invalid.

12. The method as claimed in claim 11, further comprising the steps of:
- providing an associated digitally signed piece of status information for at least one certificate (630, 620, 610) of the certificate chain, wherein the piece of status information identifies the certificate (630, 620, 610) as valid or invalid and comprises an information which defines the validity period of the piece of status information, and wherein the digitally signed piece of status information is provided in response to a confirmation information which confirms that the device certificate (630) was created by an authorized entity, wherein the confirmation information comprises that the device certificate or an information derived from the device certificate is stored in retrievable manner in a predefined database,
- defining an associated checking time for each piece of status information,
- identifying the device certificate (630) as valid only if
- for each piece of status information the associated checking time is within the validity period of the respective piece of status information, and
- each piece of status information identifies the respective associated certificate as valid, wherein the identification of the certificate (630, 620, 610) as valid comprises a proof that the certificate (630, 620, 610) was created by an authorized entity, wherein the proof is derived from the fact that the certificate or information derived from the certificate is stored in the predefined database.

13. The method as claimed in any one of claims 9 to 12, wherein the point in time at which the validity check of the device certificate (630) is performed is defined as the associated checking time for at least one of the certificates (630, 620, 610) of the certificate chain and/or at least one of the pieces of status information.

14. The method as claimed in any one of claims 9 to 13, wherein the point in time associated with the device certificate via the authenticated timestamp is defined as the associated checking time for at least one of the pieces of status information.

15. The method as claimed in any one of claims 9 to 14, wherein the point in time at which the validity check of the device certificate (630) is performed is defined as the associated checking time for the device certificate (630), and wherein for all further certificates (620, 610) of the certificate chain the point in time associated with the device certificate via a timestamp is defined as the associated checking time.

16. The method as claimed in any one of claims 9 to 15, wherein the point in time at which the preceding certificate in the certificate chain was created or at which the validity period of the preceding certificate in the certificate chain starts is defined as the associated checking time for at least one of the certificates (630, 620, 610) of the certificate chain and/or for the piece of status information associated with this certificate.

17. The method as claimed in any one of claims 9 to 16, wherein the device certificate (630) has the function of a certificate of authenticity or of an ownership certificate, and/or the device certificate (630) is provided as an attribute certificate.

18. The method as claimed in any one of claims 9 to 17, wherein the certificate chain comprises at least one intermediate certificate (620) which is arranged between the device certificate (630) and the trusted certificate (610) in the sequence defined by the certificate chain.

19. The method as claimed in any one of claims 9 to 18, wherein the trusted certificate (610) is a self-signed root certificate.

20. A system for creating device certificates (630) for electronic devices (101-103) adapted to perform a method as claimed in any one of claims 1 to 8, comprising
- a production computer (200) having a signing key stored therein for creating device certificates (630) for electronic devices (101-103), which is adapted to access a memory (121-123) of the respective electronic device (101-103), and
- a database (300, 310) connectable to the production computer (200), in which the production computer (200) stores created device certificates (630) or values derived therefrom, wherein the database (300, 310) is adapted, to provide upon request an information about whether a requested device certificate (630) or a value derived from a requested device certificate (630) is stored in the database (300, 310), and/or
- a server (360, 370) connectable to the production computer (200), which provides a timestamp service, and which, upon a request from the production computer (200), generates a digitally signed timestamp for a device certificate (630) predefined by the production computer and transmits said digitally signed timestamp to the production computer (200), wherein the timestamp associates the predefined device certificate (630) with the point in time at which the timestamp is generated.

21. A system for checking the validity of a device certificate (630), adapted to perform a method as claimed in any one of claims 9 to 19, comprising:
- a checking device (700) for checking the validity of a device certificate (630) stored in a memory of an electronic device by means of a certificate chain (630, 620, 610), and
- a certificate information server (350, 370) which the checking device (700) can access to request a piece of status information for at least one certificate (630, 620, 610) of the certificate chain.

22. An electronic device (101-103), comprising a memory that is not readable from outside the device and in which a secret is stored, and a readable memory (121-123), wherein the readable memory stores
- all certificates of a sequence of at least two certificates starting with a device certificate (630) and terminating with a trusted certificate (610), and
- a digitally signed piece of status information that is associated with the device certificate (630), wherein
- the digitally signed piece of status information is provided in response to a confirmation information which confirms that the device certificate (630) was created by an authorized entity, wherein the confirmation information comprises that the device certificate or an information derived from the device certificate is stored in retrievable manner in a predefined database,
- each certificate in the certificate chain comprises an information defining the validity period of the respective certificate, and each certificate (610, 620) of the certificate chain with the exception of the device certificate (630) comprises a certificate information (520, 510) by means of which the respective previous certificate in the sequence (620, 630) is authenticatable, and the piece of status information identifies the device certificate as valid or invalid and comprises an information which defines the validity period of the piece of status information,
and wherein
- the piece of status information is adapted so that if the piece of status information identifies the device certificate as valid, the identification of the device certificate as valid comprises a proof that the device certificate (630) was created by an authorized entity, wherein the proof is derived from the fact that the certificate or information derived from the certificate is stored in a predefined database, and/or
the readable memory further stores a digitally signed timestamp associated with the device certificate, which associates the device certificate (630) with a point in time.

23. A storage medium associated with an electronic device (101-103), wherein the electronic device (101-103) comprises a memory which is not readable from outside the device and which has a secret stored therein, and wherein the storage medium stores
- all certificates of a sequence of at least two certificates starting with a device certificate (630) and terminating with a trusted certificate (610), and
- a digitally signed piece of status information that is associated with the device certificate (630), wherein
- the digitally signed piece of status information is provided in response to a confirmation information which confirms that the device certificate (630) was created by an authorized entity, wherein the confirmation information comprises that the device certificate or an information derived from the device certificate is stored in retrievable manner in a predefined database,
- each certificate in the certificate chain comprises an information defining the validity period of the respective certificate, and each certificate (610, 620) of the certificate chain with the exception of the device certificate (630) comprises a certificate information (520, 510) by means of which the respective previous certificate in the sequence (620, 630) is authenticatable, and the piece of status information identifies the device certificate as valid or invalid and comprises an information which defines the validity period of the piece of status information,
and wherein
- the piece of status information is adapted so that if the piece of status information identifies the device certificate as valid, the identification of the device certificate as valid comprises a proof that the device certificate (630) was created by an authorized entity, wherein the proof is derived from the fact that the certificate or information derived from the certificate is stored in a predefined database, and/or
the readable memory further stores a digitally signed timestamp associated with the device certificate, which associates the device certificate (630) with a point in time.

## Revendications

1. Procédé pour l'établissement de certificats d'appareils (630) pour des appareils électroniques (101-103), comprenant les étapes suivantes :
- mise à disposition d'un appareil électronique (101-103) avec un secret enregistré à l'intérieur et non lisible de l'extérieur de l'appareil,
- génération d'un certificat d'appareil (630) dont l'information de certificat (530) est liée, d'un point de vue cryptographique, au secret, le certificat d'appareil (630) comprenant une signature numérique (430) générée avec une clé de signature (525) et pouvant être authentifiée au moyen d'une chaîne de certification (610, 620, 630), la chaîne de certification étant une série d'au moins deux certificats commençant avec le certificat d'appareil (630), chaque certificat (610, 620, 630) de la chaîne de certification comprenant une information qui définit la période de validité du certificat correspondant, et chaque certificat (610, 620) de la chaîne de certification comprenant, à l'exception du certificat d'appareil (630), une information de certificat (510, 520) avec laquelle le certificat respectivement précédent dans la série peut être authentifié et
- création d'une information de confirmation qui confirme que le certificat d'appareil (630) a été généré par une instance autorisée, l'information de confirmation consistant en ce que le certificat d'appareil ou une information déduite du certificat d'appareil peut être lu dans une base de données prédéterminée et mise à disposition, lors d'une réponse à l'information de confirmation, d'une information d'état signée numériquement pour le certificat d'appareil (630), qui comprend une preuve que le certificat d'appareil (630) a été généré par une instance autorisée,
et/ou
- génération d'un horodatage signé numériquement, qui relie le certificat d'appareil avec le moment où l'horodatage a été généré, l'horodatage signé numériquement étant généré par un serveur (360, 370) qui met à disposition un service d'horodatage en réponse à une demande de création d'un horodatage, les horodatages générés étant comptés et le serveur (360, 370) ne générant l'horodatage que tant qu'une limite prédéfinie pour le nombre d'horodatages générés n'a pas été atteinte.

2. Procédé selon la revendication 1, comprenant en outre l'étape suivante :
- mise à disposition d'une information d'état signée numériquement pour au moins un autre certificat de la chaîne de certification, qui comprend la preuve que l'autre certificat a été généré par une instance autorisée.

3. Procédé selon l'une des revendications précédentes, dans lequel le certificat d'appareil (630) généré et/ou au moins un autre certificat de la chaîne de certification et/ou l'horodatage signé numériquement et/ou au moins une information d'état signée numériquement sont mis à disposition de façon à pouvoir être lus afin d'être associés à l'appareil, plus particulièrement par l'enregistrement dans une mémoire lisible (121-123) ou d'un moyen d'enregistrement, qui est associé à l'appareil électronique (101-103) ou qui est disposé dans l'appareil électronique (101-103), ou par la mise à disposition au moyen d'un service de répertoire.

4. Procédé selon l'une des revendications précédentes, dans lequel, pour la génération de la signature numérique (430) du certificat d'appareil (630) et de la signature numérique de l'horodatage, des clés de signature différentes sont utilisées.

5. Procédé selon l'une des revendications précédentes, dans lequel, pour la génération de la signature numérique du certificat d'appareil et de la signature numérique de l'information d'état, des clés de signature différentes sont utilisées.

6. Procédé selon l'une des revendications précédentes, comprenant en outre les étapes suivantes :
- détection d'une utilisation non autorisée d'une clé de signature (525) utilisée pour la signature d'un premier certificat (630) de la chaîne de certification, et
- génération d'une information d'état signée numériquement pour le certificat (620) suivant le premier certificat (630) dans la chaîne de certification, l'information d'état comprenant une information de blocage qui identifie comme non valide le certificat (620) suivant le premier certificat (630) dans la chaîne de certification pour des moments de vérification à partir du moment où l'utilisation non autorisée a été détectée.

7. Procédé selon l'une des revendications précédentes, dans lequel le secret est la partie privée d'une paire de clés asymétrique.

8. Procédé selon l'une des revendications précédentes, dans lequel le secret est enregistré dans une puce (111-113) de l'appareil (101-103).

9. Procédé de vérification de la validité d'un certificat d'appareil (630), comprenant les étapes suivantes :
- mise à disposition d'un certificat d'appareil (630),
- mise à disposition d'un certificat digne de confiance (610), le certificat d'appareil (630) pouvant être chaîné avec le certificat digne de confiance (610) par l'intermédiaire d'une chaîne de certification (630, 620, 610), la chaîne de certification étant une série d'au moins deux certificats commençant par le certificat d'appareil (630) et se terminant par le certificat digne de confiance (610), chaque certificat de la chaîne de certification comprenant une information qui définit la période de validité du certificat correspondant et chaque certificat (610, 620) de la chaîne de certification comprenant, à l'exception du certificat d'appareil (630), une information de certification (520, 510) avec laquelle le certificat (620, 630) précédent dans la série peut être authentifié,
- détermination d'un moment de vérification correspondant pour chaque certificat (630, 620, 610) de la chaîne de certification,
- mise à disposition d'une information d'état signée numériquement correspondant au certificat d'appareil (630), l'information d'état identifiant le certificat d'appareil comme valide ou non valide et comprenant une information qui définit la période de validité de l'information d'état et l'information d'état signée numériquement étant mise à disposition en réponse à une information de confirmation qui confirme que le certificat d'appareil (630) a été généré par une instance autorisée, l'information de confirmation consistant en ce que le certificat d'appareil ou une information déduite du certificat d'appareil est enregistré dans une base de données prédéterminée de façon à pouvoir être lu,
- détermination d'un moment de vérification correspondant pour l'information d'état correspondant au certificat d'appareil (630),
- vérification
- si le certificat d'appareil (630) peut être authentifié avec succès au moyen de la chaîne de certification (630, 620, 610),
- si, pour chaque certificat (630, 620, 610) de la chaîne de certification, le moment de vérification correspondant se trouve dans la période de validité du certificat correspondant,
- au moyen d'un secret enregistré dans une mémoire de l'appareil (101-103) non lisible de l'extérieur de l'appareil (101-103), si un lien existe entre le certificat d'appareil (630) et l'appareil (101-103),
- si, pour l'information d'état correspondant au certificat d'appareil (630), le moment de vérification correspondant se trouve dans la période de validité de l'information d'état,
- si l'information d'état correspondant au certificat d'appareil (630) identifie le certificat d'appareil comme valide, l'identification du certificat d'appareil comme valide comprenant la preuve que le certificat d'appareil (630) a été généré par une instance autorisée, la preuve étant déduite du fait que le certificat ou une information déduite du certificat est enregistré dans la base de données prédéterminée,
moyennant quoi, lors d'une vérification réussie, le certificat d'appareil (630) est reconnu comme valide, sinon il est reconnu comme non valide.

10. Procédé selon la revendication 9, comprenant en outre les étapes suivantes :
- mise à disposition d'une information d'état associée signée numériquement pour au moins un autre certificat (620, 610) de la chaîne de certification, l'information d'état identifiant l'autre certificat (620, 610) comme valide ou non valide et comprenant une information qui définit la période de validité de l'information d'état et l'information d'état signée numériquement étant mise à disposition en réponse à une information de confirmation qui confirme que l'autre certificat a été généré par une instance autorisée, l'information de confirmation consistant en ce que l'autre certificat ou une information déduite de l'autre certificat est enregistré dans une base de données prédéterminée de façon à pouvoir être lu,
- détermination d'un moment de vérification correspondant pour chaque information d'état,
- reconnaissance du certificat d'appareil (630) comme valide uniquement lorsque
- pour chaque information d'état, le moment de vérification correspondant se trouve dans la période de validité de l'information d'état correspondante et
- chaque information d'état identifie l'autre certificat correspondant comme valide, l'identification de l'autre certificat (620, 610) comme valide comprenant la preuve que l'autre certificat (620, 610) a été généré par une instance autorisée, la preuve étant déduite du fait que l'autre certificat ou une information déduite de l'autre certificat est enregistré dans la base de données prédéterminée.

11. Procédé de vérification de la validité d'un certificat d'appareil (630), comprenant les étapes suivantes :
- mise à disposition d'un certificat d'appareil (630),
- mise à disposition d'un certificat digne de confiance (610), le certificat d'appareil (630) pouvant être chaîné avec le certificat digne de confiance (610) par l'intermédiaire d'une chaîne de certification (630, 620, 610), la chaîne de certification étant une série d'au moins deux certificats commençant par le certificat d'appareil (630) et se terminant par le certificat digne de confiance (610), chaque certificat de la chaîne de certification comprenant une information qui définit la période de validité du certificat correspondant et chaque certificat (610, 620) de la chaîne de certification comprenant, à l'exception du certificat d'appareil (630), une information de certification (520, 510) avec laquelle le certificat (620, 630) précédent dans la série peut être authentifié,
- mise à disposition d'un horodatage signé numériquement correspondant au certificat d'appareil, qui associe le certificat d'appareil (630) avec un moment où l'horodatage est généré, l'horodatage signé numériquement étant généré par un serveur (360, 370) qui met à disposition un service d'horodatage, en réponse à une demande de création d'un horodatage, les horodatages générés étant comptés et le serveur (360, 370) ne générant l'horodatage que tant qu'une limite prédéfinie pour le nombre d'horodatages générés n'a pas été atteinte ;
- détermination d'un moment de vérification correspondant pour chaque certificat (630, 620, 610) de la chaîne de certification, le moment de vérification correspondant, déterminé pour au moins un des certificats (630, 620, 610) de la chaîne de certification, étant le moment associé au certificat d'appareil (630) par l'intermédiaire de l'horodatage,
- vérification
- si le certificat d'appareil (630) peut être authentifié avec succès au moyen de la chaîne de certification (630, 620, 610),
- si l'horodatage peut être authentifié avec succès,
- si, pour chaque certificat (630, 620, 610) de la chaîne de certification, le moment de vérification correspondant se trouve dans la période de validité du certificat correspondant,
- au moyen d'un secret enregistré dans une mémoire de l'appareil (101-103) non lisible de l'extérieur de l'appareil (101-103), s'il existe un lien entre le certificat d'appareil (630) et l'appareil (101-103),
moyennant quoi, lors d'une vérification réussie, le certificat d'appareil (630) est reconnu comme valide, sinon il est reconnu comme non valide.

12. Procédé selon la revendication 11, comprenant en outre les étapes suivantes :
- mise à disposition d'une information d'état associée signée numériquement pour au moins un certificat (630, 620, 610) de la chaîne de certification, l'information d'état identifiant le certificat (630, 620, 610) comme valide ou non valide et comprenant une information qui définit la période de validité de l'information d'état et l'information d'état signée numériquement étant mise à disposition en réponse à une information de confirmation qui confirme que le certificat d'appareil (630) a été généré par une instance autorisée, l'information de confirmation consistant en ce que le certificat d'appareil ou une information déduite du certificat d'appareil est enregistré dans une base de données prédéterminée de façon à pouvoir être lu,
- détermination d'un moment de vérification correspondant pour chaque information d'état,
- reconnaissance du certificat d'appareil (630) comme valide uniquement lorsque
- pour chaque information d'état, le moment de vérification correspondant se trouve dans la période de validité de l'information d'état correspondante, et
- chaque information d'état identifie le certificat correspondant comme valide, l'identification du certificat (630, 620, 610) comme valide comprenant la preuve que le certificat (630, 620, 610) a été généré par une instance autorisée, la preuve étant déduite du fait que le certificat ou une information déduite du certificat est enregistré dans la base de données prédéterminée.

13. Procédé selon l'une des revendications 9 à 12, dans lequel le moment de vérification correspondant déterminé pour au moins un des certificats (630, 620, 610) de la chaîne de certification et/ou au moins une des informations d'état est défini comme le moment où la vérification de la validité du certificat d'appareil (630) est effectuée.

14. Procédé selon l'une des revendications 9 à 13, dans lequel le moment de vérification correspondant déterminé pour au moins une des informations d'état est défini comme le moment associé au certificat d'appareil par l'intermédiaire de l'horodatage authentifié.

15. Procédé selon l'une des revendications 9 à 14, dans lequel le moment de vérification correspondant déterminé pour le certificat d'appareil (630) est défini comme le moment où la vérification de la validité du certificat d'appareil (630) est effectuée et, pour tous les autres certificats (620, 610) de la chaîne de certification, comme le moment associé au certificat d'appareil (630) par l'intermédiaire d'un horodatage.

16. Procédé selon l'une des revendications 9 à 15, dans lequel le moment de vérification correspondant déterminé pour au moins un des certificats (630, 620, 610) de la chaîne de certification et/ou pour l'information d'état correspondant à ce certificat est défini comme le moment où le certificat précédent dans la chaîne de certification a été généré ou comme le moment où la période de validité du certificat précédent dans la chaîne de certification commence.

17. Procédé selon l'une des revendications 9 à 16, dans lequel le certificat d'appareil (630) ayant la fonction d'un certificat en temps réel ou d'un certificat de propriétaire et/ou le certificat d'appareil (630) est conçu comme un certificat d'attribut.

18. Procédé selon l'une des revendications 9 à 17, dans lequel la chaîne de certification comprend au moins un certificat intermédiaire (620) qui est disposé, dans l'ordre défini par la chaîne de certification, entre le certificat d'appareil (630) et le certificat digne de confiance (610).

19. Procédé selon l'une des revendications 9 à 18, dans lequel le certificat digne de confiance (610) est un certificat racine auto-signé.

20. Système de création de certificats d'appareils (630) pour des appareils électroniques (101-103), conçu pour l'exécution d'un procédé selon l'une des revendications 1 à 8, comprenant :
- un ordinateur de production (200) avec une clé de signature enregistrée à l'intérieur, pour la génération de certificats d'appareils (630) pour des appareils électroniques (101-103), conçu pour accéder à une mémoire (121-123) de l'appareil électronique (101-103) correspondant et
- une base de données (300, 310) pouvant être reliée à l'ordinateur de production (200), dans laquelle l'ordinateur de production (200) enregistre les certificats d'appareils (630) générés ou des valeurs dérivées de ceux-ci, la base de données (300, 310) étant conçue pour mettre à disposition, sur demande, une information indiquant si un certificat d'appareil (630) demandé ou une valeur dérivée d'un certificat d'appareil (630) demandé est enregistré dans la base de données (300, 310) et/ou
- un serveur (360, 370) pouvant être relié à l'ordinateur de production (200), qui met à disposition un service d'horodatage et qui, à la demande de l'ordinateur de production (200), génère, pour un certificat d'appareil (630) prédéterminé par l'ordinateur de production, un horodatage signé numériquement et le transmet à l'ordinateur de production (200), dans lequel l'horodatage associe le certificat d'appareil (630) prédéterminé avec le moment où l'horodatage est généré.

21. Système de vérification de la validité d'un certificat d'appareil (630), qui est conçu pour l'exécution d'un procédé selon l'une des revendications 9 à 19, comprenant
- un appareil de vérification (700) pour la vérification de la validité d'un certificat d'appareil (630) enregistré dans une mémoire d'un appareil électronique au moyen d'une chaîne de certification (630, 620, 610) et
- un serveur de renseignement sur les certificats (350, 370) auquel l'appareil de vérification (700) peut accéder afin de demander des informations d'état pour au moins un certificat (630, 620, 610) de la chaîne de certification.

22. Appareil électronique (101-103) avec une mémoire non lisible de l'extérieur de l'appareil, avec un secret enregistré à l'intérieur de celle-ci et avec une mémoire lisible (121-123), moyennant quoi, dans la mémoire lisible, sont enregistrés
- tous les certificats d'une série d'au moins deux certificats commençant par un certificat d'appareil (630) et se terminant par un certificat digne de confiance (610) et
- une information d'état signée numériquement correspondant au certificat d'appareil (630),
moyennant quoi
- l'information d'état signée numériquement est mise à disposition en réponse à une information de confirmation qui confirme que le certificat d'appareil (630) a été généré par une instance autorisée, l'information de confirmation consistant en ce que le certificat d'appareil ou une information dérivée du certificat d'appareil est enregistré dans une base de données prédéterminée de façon à pouvoir être lu,
- chaque certificat de la chaîne de certification comprend une information qui définit une période de validité du certificat correspondant et chaque certificat (610, 620) de la chaîne de certification comprend, à l'exception du certificat d'appareil (630), une information de certification (520, 510) avec laquelle le certificat (620, 630) précédent dans la série peut être authentifié et l'information d'état identifie le certificat d'appareil comme valide ou non valide et comprend une information qui définit la période de validité de l'information d'état et
- l'information d'état est conçue de façon à ce que, lorsque l'information d'état identifie le certificat d'appareil comme valide, l'identification du certificat d'appareil comme valide comprend la preuve que le certificat d'appareil a été généré par une instance autorisée, la preuve étant déduite du fait que le certificat ou une information dérivée du certificat est enregistré dans une base de données prédéterminée et/ou
- dans la mémoire lisible, est en outre enregistré un horodatage signé numériquement correspondant au certificat d'appareil, qui associe le certificat d'appareil (630) avec un moment.

23. Moyen d'enregistrement, associé à un appareil électronique (101-103), l'appareil électronique (101-103) comprenant une mémoire non lisible de l'extérieur de l'appareil avec un secret enregistré à l'intérieur et moyennant quoi, dans le moyen d'enregistrement, sont enregistrés
- tous les certificats d'une série d'au moins deux certificats commençant par un certificat d'appareil (630) et se terminant par un certificat digne de confiance (610) et
- une information d'état signée numériquement correspondant au certificat d'appareil (630),
- l'information d'état signée numériquement étant mise à disposition en réponse à une information de confirmation qui confirme que le certificat d'appareil (630) a été généré par une instance autorisée, l'information de confirmation consistant en ce que le certificat d'appareil ou une information dérivée du certificat d'appareil est enregistré dans une base de données prédéterminée de façon à pouvoir être lu,
- chaque certificat de la chaîne de certification comprenant une information qui définit la période de validité du certificat correspondant et chaque certificat (610, 620) de la chaîne de certification comprenant, à l'exception du certificat d'appareil (630), une information de certification (520, 510) avec laquelle le certificat (620, 610) précédent dans la série peut être authentifié et l'information d'état identifiant le certificat d'appareil comme valide ou non valide et comprenant une information qui définit la période de validité de l'information d'état, et
- l'information d'état étant conçue de façon à ce que, lorsque l'information d'état identifie le certificat d'appareil comme valide, l'identification du certificat d'appareil comme valide comprend la preuve que le certificat d'appareil a été généré par une instance autorisée, la preuve étant déduite du fait que le certificat ou une information dérivée du certificat est enregistré dans une base de données prédéterminée, et/ou
- dans la mémoire lisible, est enregistré en outre un horodatage signé numériquement correspondant au certificat d'appareil, qui associe le certificat d'appareil (630) à un moment.
